# EUROPÄISCHE PATENTSCHRIFT

(11) **EP 4 007 087 B1**
(45) Veröffentlichungstag und Bekanntmachung des Hinweises auf die Patenterteilung: **07.02.2024**
(21) Anmeldenummer: 22151555.4
(22) Anmeldetag: 11.11.2019
(51) Int. Cl.: H01R 43/042, B25B 27/14, G01L 1/16, G01L 5/00, B25B 7/02, B25B 7/12, B25B 7/16

(54) **CRIMPZANGE**
CRIMPING TOOL
PINCE À SERTIR

(43) Veröffentlichungstag der Anmeldung: 01.06.2022
(62) Teilanmeldung aus: 19208363.2
(73) Patentinhaber: WEZAG GmbH & Co. KG, 35260 Stadtallendorf (DE)
(72) Erfinder: Glockseisen, Thomas, 40217 Düsseldorf (DE)
(74) Vertreter: REHBERG HÜPPE + PARTNER

(56) Entgegenhaltungen:
- EP-A1- 3 396 796
- DE-A1-102015 107 302
- DE-U1- 29 806 179
- US-A1- 2008 078 255

## Beschreibung

Die Erfindung betrifft eine Crimpzange, in der mittels eines Kraftsensors die während eines Crimpvorgangs wirkende Crimpkraft gemessen wird. Dies kann beispielsweise zur Überwachung des Crimpprozesses, für eine Qualitätssicherung und/oder für eine Dokumentation des Crimpprozesses erfolgen.

Manuell betätigte Crimpzangen der hier vorliegenden Art dienen zum Verpressen eines Werkstücks (insbesondere eines Steckers mit einem elektrischen Kabel). Eine Crimpzange kann dabei grundsätzlich gemäß der nicht vorveröffentlichten europäischen Patentanmeldung EP 16 156 231.9 oder einer der Druckschriften EP 3 012 924 A1, EP 3 012 923 A1, EP 2 698 885 A1, EP 2 672 580 A1, EP 2 463 969 A2, DE 37 08 727 C2, DE 40 23 337 C1, DE 40 26 332 C2, DE 40 39 435 C1, DE 42 41 224 C1, DE 44 27 553 C2, DE 197 13 580 C2, DE 197 53 436 C2, DE 198 02 287 C1, DE 198 07 737 C2, DE 298 03 336 U1, DE 198 32 884 C1, DE 100 56 900 C1, DE 101 32 413 C2, DE 101 40 270 B4, DE 102 42 345 B3, DE 10 2005 003 615 B3, DE 10 2005 003 617 B3, DE 10 2007 038 626 B3, DE 10 2008 003 524 B4, DE 10 2008 012 011 B3, DE 20 2008 003 703 U1, EP 1 724 101 A1, EP 2 305 428 A1, DE 10 2010 061 148 A1, DE 10 2001 052 967 B4 oder entsprechend den vor dem Anmeldetag der vorliegenden Patentanmeldung seitens der Anmelderin vertriebenen Crimphandwerkzeugen mit den Kennzeichnungen CS10, CSV10, CSV10-LWL, CSV10-FFC, AE, CS8, CK100, CS30, CS KTVR, CE/CG, CS150, CS200, CS210, CP600 ausgebildet sein.

Die Crimpzange dient insbesondere einerseits einer Herstellung einer dauerhaften mechanischen Verbindung zwischen dem Stecker und dem Kabel im Bereich der Isolation des Kabels mittels eines Isolationscrimps und andererseits einer Gewährleistung einer dauerhaften elektrischen Kontaktierung zwischen dem Stecker und dem elektrischen Leiter des Kabels mittels eines Leitercrimps. Je nach zum Einsatz kommendem Profil der Gesenke können unterschiedliche Crimpvorgänge mit der Crimpzange ausgeführt werden.

Beispielsweise kann es sich bei dem Leitercrimp um einen geschlossenen Crimp handeln, bei dem das Kabel in eine geschlossene Crimpzone eines Steckers oder in eine geschlossene Hülse eingeführt wird und durch plastische Verformung der Crimpzone oder der Hülse vercrimpt wird. Möglich ist aber auch, dass ein offener Crimp erzeugt wird, bei dem der Stecker eine offene Crimpzone aufweist, in das Kabel von oben eingelegt werden kann. Um lediglich einige, die Erfindung nicht beschränkende Beispiele zu nennen, können mit dem hier einschlägigen Crimpwerkzeug
- Kabelschuhe nach DIN 4623,
- Aluminiumverbinder nach DIN 46329
- Aluminium-Presskabelschuhe nach DIN 48201
- Quetschkabelschuhe nach DIN 46234,
- Stiftkabelschuhe nach DIN 46230 oder
- Verbinder, Stecker oder Kabelschuhe für eine Verbindung mit einem Kabel, wie diese in dem Produktkatalog der WEZAG GmbH Werkzeugfabrik "Werkzeuge für die professionelle Anwendung" mit der Veröffentlichungs-Nr. 10/11 beschrieben sind,
vercrimpt werden.

Bei dem hergestellten Crimp kann es sich beispielsweise für einen geschlossenen Crimp um einen Sechskant- oder Hexagonalcrimp, einen Vierkantcrimp, einen B-Crimp, einen Trapezcrimp, einen modifizierten Trapezcrimp, einen Ovalcrimp, einen Dorncrimp oder einen Zweidorncrimp handeln. Ein offener Crimp kann bspw. als V-Crimp oder B-Crimp, als Rollcrimp oder als Doppelrollcrimp ausgebildet sein.

Zusätzlich zur Herstellung der elektrischen Verbindung zwischen Leiter und Stecker mittels des Leitercrimps kann eine mechanische Verbindung mittels des Isolationscrimps hergestellt werden. Hierbei kann ein geschlossener Isolationscrimp oder ein offener Isolationscrimp (insbesondere V-Crimp oder B-Crimp, O-Crimp oder OV-Crimp) Einsatz finden. Hinsichtlich weiterer Informationen
- zur Ausgestaltung einer gattungsgemäßen Crimpzange,
- zu möglichen Einsatzbereichen der gattungsgemäßen Crimpzange und/oder
- zu unterschiedlichen möglichen Typen von Crimpverbindungen, welche mittels der gattungsgemäßen Crimpzange hergestellt werden können,
wird auf das Werk
- "Crimptechnik, Herstellung prozesssicherer Verbindungen von elektrischen Leitern und Steckern" der WEZAG GmbH Werkzeugfabrik, Die Bibliothek der Technik 342, Verlag Moderne Industrie, ISBN 978-3-68236-027-7
verwiesen.

### STAND DER TECHNIK

Die Druckschrift DE 10 2007 050 176 A1 beschreibt, dass bei dem Crimpen eines Steckers mit einem elektrischen Kabel mittels einer Crimpzange die zunehmende Komplexität von Kabelbäumen, eine verschärfte Produkthaftung und erhöhte Garantieanforderungen eine Qualitätssicherung durch Überwachung der Crimpkraft erfordern. Vorgeschlagen wird eine Kraftmesseinrichtung, welche als piezoelektrischer Kraftsensor oder als Dehnmessstreifen ausgebildet sein kann. Die Kraftmesseinrichtung ist auf einer Außenseite eines Crimpstempels oder auch innerhalb des Crimpstempels oder in einer Crimpaufnahme angeordnet. Des Weiteren verfügt die Crimpzange über einen Sender, der oberhalb des Crimpstempels am Crimpzangenkopf angebracht ist. Der Sender sendet ein drahtloses Crimpkraftsignal aus, welches von einer Empfangs- und Auswertereinrichtung empfangen und ausgewertet wird. Der Sender kann über Bedienelemente ein- und ausgeschaltet werden. Des Weiteren kann über diese Bedienelemente unter Umständen die Frequenz des Senders eingestellt werden. In den Sender ist eine Energiequelle in Form einer elektrischen Batterie oder eines aufladbaren Akkumulators zur Energieversorgung des Senders und der Kraftmesseinrichtung vorgesehen. Auch vorgeschlagen wird, dass der Sender über eine Induktionsspule verfügen kann, in welcher ein äußeres Magnetfeld einen Induktionsstrom erzeugen kann, um den Akkumulator aufzuladen. Ebenfalls vorgeschlagen wird, dass an der Crimpzange eine Solarzelle montiert ist zur Aufladung des Akkumulators. Schließlich wird auch vorgeschlagen, dass eine temporäre Kabelverbindung vorhanden ist. Der Sender besitzt eine Anzeigevorrichtung, an welcher die Crimpkraft, die Sendefrequenz, das Bestehen einer drahtlosen Verbindung, der Ladezustand der Energiequelle u. ä. angezeigt werden kann. Die Anzeigevorrichtung kann als LED- oder LCD-Anzeigevorrichtung ausgebildet sein. Zusätzlich kann an der Crimpzange ein Wegmesssystem zur Erfassung des Arbeitshubs der Crimpzange vorgesehen sein. Um Beschädigungen zu vermeiden, kann die Crimpzange über eine Ratschen- oder Durchrutsch-Einrichtung verfügen, welche die applizierbare Crimpkraft auf einen vorgegebenen Wert begrenzt. Des Weiteren wird vorgeschlagen, dass die Empfangs-Auswertevorrichtung als handelsüblicher PC mit einem Bluetooth-Empfänger ausgebildet ist.

Die Druckschrift DE 298 06 179 U1 beschreibt als aus DE 40 14 221 A1 bekannt, in einer Crimppresse die Qualität der erstellten Crimpverbindung durch Erfassung der Crimpkraft zu überwachen. Hierzu ist der Crimpstempel, die Crimpform oder der Unterbau als Federkörper ausgebildet, an dem ein Dehnungsmessstreifen angebracht ist. Der Weg des Crimpstempels wird über einen induktiven Wegaufnehmer erfasst. Die Druckschrift schlägt vor diesem Hintergrund die Erfassung einer Crimpkraft und des Crimpweges auch an einer Crimpzange vor. Hierzu wird ein erster Kraftsensor eingesetzt, welcher unmittelbar die Crimpkraft im Zangenmaul erfasst. Ein zweiter Kraftsensor erfasst den Öffnungsweg der Maulöffnung, sodass über diesen mittelbar die Erfassung eines Crimpweges erfolgt. Als Kraftsensoren werden hier Dehnungsmessstreifen oder piezoelektrische Kraftsensoren eingesetzt. Hierbei kann ein Dehnungsmessstreifen auf einer Blattfeder angebracht werden, welche bei der Schließbewegung der Crimpzange gespannt wird. Vorgeschlagen wird auch, dass der erste Kraftsensor an einem Zwischenteil in einem Hebelantrieb der Crimpzange angebracht ist oder der erste Kraftsensor bei daran befestigtem Crimpeinsatz zwischen dem Crimpeinsatz und der Zangenbacke liegt. Zur Temperaturkompensation kann ein Referenzsensor eingesetzt werden. An der Crimpzange kann eine Auswerteschaltung vorgesehen sein mit einer geeigneten Anzeige, um den Benutzer der Crimpzange während des Crimpens über die Qualität des Crimpverlaufs zu informieren. Auch ein Datenspeicher kann an der Crimpzange vorgesehen sein, in welchem für unterschiedliche Arten von Crimpungen, insbesondere verschiedene Kontakttypen, Kraft-Weg-Verläufe gespeichert werden können, sodass für eine spezielle Crimpung der zugeordnete Kraft-Weg-Verlauf bei der Qualitätsüberwachung zur Verfügung steht. Als optische Anzeigeeinrichtung an der Crimpzange kann eine Leuchtdiodenanzeige oder eine Flüssigkristallanzeige Einsatz finden. Ergänzend kann eine Signalausgabe über eine akustische Ausgabeeinrichtung erfolgen. Findet eine aus Leuchtdioden bestehende optische Anzeigevorrichtung oder eine akustische Ausgabeeinrichtung Einsatz, kann über diese die erfolgreiche Durchführung eines Crimpvorgangs durch unterschiedliche Farben oder Töne bestätigt werden. Als Schnittstelle für einen stationären Rechner kann eine kabelgebundene oder optische Schnittstelle sowie jede mögliche über Luft übertragene Schnittstelle eingesetzt werden, welche elektromagnetische Strahlung im sichtbaren, infraroten oder Radio-Bereich zum Datenaustausch nutzt. Hierbei kann es sich auch um eine bidirektionale Schnittstelle handeln. Möglich ist auch, dass die Schließbewegung des Zangenmauls bei der Crimpzange über einen elektrischen Servomotor unterstützt wird. Die Überwachung des Crimpkraftverlaufs kann darin bestehen, dass der gemessene Crimpkraftverlauf mit einem vorbestimmten Crimpkraftverlauf, ggf. mit einem vorgegebenen Toleranzbereich, verglichen wird.

Das Patent DE 10 2004 009 489 B4 nennt die Druckschriften US 5, 195, 042, DE 298 06 179, DE 199 32 962 und DE 697 00 589 als relevanten Stand der Technik hinsichtlich des Einsatzes von Weg-Kraft-Messsystemen in der Crimptechnik und betrifft eine elektronische Überwachung eines Einstellvorganges einer Crimpzange.

In der Patentanmeldung DE 10 2008 030 773 A1 werden die Druckschriften DE 40 14 221, DE 43 37 796, DE 199 32 962, DE 29 806 179.1 und US-PS 5 490 406 als relevanter Stand der Technik hinsichtlich vorbekannter elektronischer Einrichtungen zur Kraft-Weg-Messung in Crimpzangen genannt. Auch diese Patentanmeldung DE 10 2008 030 773 A1 betrifft die elektronische Überwachung eines Einstellvorganges der Crimpzange. Hierbei kommt ein Sensorsystem zum Einsatz, welches absolut oder inkremental einen Crimpweg erfasst. Über eine Steuer-, Überwachungs- und Auswerteinheit kann eine elektronische Anzeige an einer LCD-Anzeige erzeugt werden. Einsatz finden kann eine Kassette, in welche ein Rechnersystem sowie eine der Aufnahme- und Einstelleinrichtung dienende Baueinheit mit dem Sensorsystem integriert sein kann. Baueinheiten können in eine bereits fertig montierte Zange ein- und ausgebaut werden mit einer Auswechslung jeweils im Bedarfsfall.

Das europäische Patent EP 2 043 818 B1 betrifft die Ausstattung einer handbetätigten Zange mit einer Signaleinrichtung, welche das Erreichen einer vorgegeben Schließkraft für die Hand des Benutzer fühlbar macht. Hierbei ist die Signaleinrichtung als in einem Handhebel integrierter Vibrator ausgebildet.

Die Druckschrift EP 2 698 885 A1 offenbart eine nicht gattungsgemäße Crimpmaschine, in welcher unterschiedliche Wechseladapter Einsatz finden können. Die Wechseladapter verfügen jeweils über einen Stempel sowie einen Amboss. In die Wechseladapter ist des Weiteren jeweils ein Sensor integriert, über welchen eine Erfassung einer Crimpkraft und/oder eine Erfassung eines Crimpwegs erfolgt. Hierbei können in den Wechseladaptern jeweils Sensoren mit unterschiedlichen Messbereichen für unterschiedliche Anwendungen Einsatz finden. Ein Kraftsensor kann in eine Ausnehmung des Ambosses oder des Stempels des Wechseladapters integriert sein. Eine Verformung des Ambosses oder des Stempels soll dann zu einer Beaufschlagung des in der Ausnehmung angeordneten Sensors mit einer Kraft führen. In diesem Fall sollen die elastisch verformbaren Bereiche des Ambosses oder des Stempels der Abstützung über den Sensor mechanisch parallelgeschaltet sein. Eine Kalibrierung der Wechseladapter und der Kraftsensoren derselben kann werkseitig oder nach Auslieferung des Wechseladapters erfolgen. Ermittelte Kalibrierfaktoren oder Kalibrierkurven können in einer in den Wechseladapter integrierten Steuereinheit modelliert oder abgelegt werden.

Die Druckschrift EP 3 396 796 A1 schlägt vor, in einer Crimpzange eine Gesenkhälfte in mechanischer Parallelschaltung einerseits über eine als Elastomerkörper ausgebildete Feder und andererseits über einen Kraftsensor abzustützen, so dass der Kraftfluss der Crimpkraft aufgeteilt wird in zwei Teilkraftflüsse mit zwei Crimpkraftkomponenten. Dies hat zur Folge, dass der Kraftsensor nicht mit der gesamten Crimpkraft beaufschlagt wird, sondern nur mit einer Crimpkraftkomponente, womit die Anforderungen an den Kraftsensor hinsichtlich der maximal zulässigen Kraft reduziert werden können. Der Kraftsensor basiert dabei auf einer (insbesondere halbkugelförmigen) elastischen Kalotte, welche mit der auf den Kraftsensor wirkenden Crimpkraftkomponente gegen eine Sensorfläche gedrückt wird. Die Größe oder der Durchmesser der Kontaktfläche zwischen der elastischen Kalotte und der Sensorfläche ist dabei von der Crimpkraftkomponente abhängig. Die Größe der Kontaktfläche wird mittels einer Reihe oder Matrix von in der Sensorfläche angeordneten Kontakten oder Schaltern erfasst, wobei die Zahl der betätigten Kontakte oder Schalter mit der Größe der Kontaktfläche korreliert. Aus der derart erfassten Größe der Kontaktfläche kann dann über die Verformungscharakteristik der Kalotte die Crimpkraftkomponente und aus der a-priori bekannten Abhängigkeit der Crimpkraftkomponente von der Crimpkraft die Crimpkraft bestimmt werden.

US 2008/0078255 A1 offenbart eine Crimpmaschine mit einem an einem Ambos gehaltenen Gesenk und einem an einem Stempel gehaltenen Gesenk, wobei der Stempel an einem Rahmen der Crimpmaschine geführt ist. In dem Ambos verläuft die Crimpkraft über eine Sensoreinrichtung, bei der eine piezoelektrische Polymerfolie sandwichartig zwischen zwei Platten aufgenommen ist. Die piezoelektrische Polymerfolie weist vorzugsweise Polyvinylidenfluorid (PVDF) auf.

Mittels der piezoelektrischen Polymerfolie soll die Crimpkraft während des maschinellen Crimpprozesses gemessen werden. Um den Einfluss von Fehlausrichtungen der Gesenke oder des Stempels und des Ambosses zu vermeiden, kann der Kraftfluss über zwei in mechanischer Parallelschaltung angeordnete piezoelektrische Polymerfolienelemente verlaufen. Durch Einsatz der piezoelektrischen Polymerfolie soll gemäß US 2008/0078255 A1 der Einsatz eines Montagebolzens entbehrlich gemacht werden, wie dieser für Kraftsensoren in Ausgestaltung als Sensorringe erforderlich ist. Andererseits soll die piezoelektrische Polymerfolie oder die Polymerfolienelemente zu einem verringerten Fehlereinfluss bei einer nicht exakten axialen Beaufschlagung, Verkippungen und Beaufschlagungen mit einem Biegemoment, wie dies für kristallische oder keramische Sensoren der Fall ist, vermeiden.

Weiterer Stand der Technik ist aus DE 10 2015 107 302 A1 bekannt.

### AUFGABE DER ERFINDUNG

Der Erfindung liegt die Aufgabe zugrunde, eine Crimpzange vorzuschlagen, die insbesondere
- hinsichtlich der Bauraumverhältnisse verbessert ist und/oder
- ein vorteilhaftes Sensorprinzip aufweist und/oder
- kommerziell verfügbare Kraftsensorkomponenten einsetzt und/oder
- eine verbesserte Überwachung der Kraftverhältnisse während eines Crimpvorganges ermöglicht.

### LÖSUNG

Die Aufgabe der Erfindung wird erfindungsgemäß mit den Merkmalen von Anspruch 1 gelöst. Weitere bevorzugte erfindungsgemäße Ausgestaltungen sind den abhängigen Patentansprüchen zu entnehmen.

### BESCHREIBUNG DER ERFINDUNG

Die vorliegende Erfindung schlägt eine Crimpzange vor, die eine Zangenbacke aufweist, bei der es sich insbesondere um eine feste Zangenbacke der Crimpzange oder eine bewegliche Zangenbacke der Crimpzange handelt. An der Zangenbacke ist eine Gesenkhälfte abgestützt. In der Crimpzange erfolgt mittels eines Kraftsensors eine Messung der Crimpkraft, die auf die Gesenkhälfte wirkt. Hierbei kann der Kraftsensor die gesamte Crimpkraft erfassen oder lediglich eine Crimpkraftkomponente, aus welcher dann die gesamte Crimpkraft ermittelt werden kann, beispielsweise über eine Proportionalitätskonstante oder in Abhängigkeit der Kinematik der Crimpzange.

Erfindungsgemäß wird vorgeschlagen, dass der Kraftsensor eine Piezofolie aufweist, mittels welcher die Crimpkraft (oder Crimpkraftkomponente) gemessen wird. Derartige Piezofolien sind beispielsweise kommerziell verfügbar, so dass diese auf einfache Weise und unter Umständen auch zu geringen Kosten beschafft werden können. Piezofolien bilden große Sensorflächen aus, womit je nach Vorgabe der Größe der Sensorfläche die von der Crimpkraft (oder Crimpkraftkomponente) erzeugte Flächenpressung hinreichend klein gehalten werden kann. Andererseits verfügen die Piezofolien über eine kleine Erstreckung in Messrichtung und damit in Richtung der wirkenden Crimpkraft, so dass der Einsatz der Piezofolie unter Umständen dazu führt, dass der Kraftsensor und damit die Crimpzange kompakt ausgestaltet sein kann, insbesondere mit einer kleinen Erstreckung der Zangenbacke und des Zangenkopfs in Richtung der Crimpkraft.

Piezofolien weisen über die Erstreckung der Piezofolie verteilte Piezoelemente auf, die in der Form einer Folie hergestellt sind. Hierbei ist ein Piezoelement ein Bauteil, welches den Piezoeffekt ausnutzt, indem dieses bei Einwirken einer mechanischen Kraft (hier der Crimpkraft oder Crimpkraftkomponente) eine elektrische Spannung produziert. In Piezoelementen können Piezokristalle, piezoelektrische Keramiken oder polykristalline Materialien Einsatz finden. Vorzugsweise handelt es sich bei der erfindungsgemäß eingesetzten Piezofolie um einen durchsichtigen Film aus hochpolarisiertem Polyvinylidenfluorid (PVDF), welcher metallisch beschichtete Außenflächen aufweist, an denen die infolge der einwirkenden Kraft erzeugte elektrische Ladung abgegriffen und als Sensorsignal verwendet werden kann. Hierbei kann die Piezofolie flexibel oder starr sein. Vorzugsweise verfügt die Piezofolie über eine Erstreckung in Richtung der wirkenden Crimpkraft von weniger als 100 µm, weniger 70 µm, weniger als 50 µm, weniger als 30 µm, weniger als 20 µm oder sogar weniger als 10 µm.

Soll die erfindungsgemäß eingesetzte Piezofolie lediglich eine Crimpkraftkomponente aufnehmen, aus welcher dann die gesamte Crimpkraft ermittelt wird, kann die Crimpkraft in mechanischer Parallelschaltung einerseits über die Piezofolie und andererseits über mindestens einen Elastomerkörper oder ein anderes elastisches Abstützelement übertragen werden. In diesem Fall ist die Piezofolie in einem ersten Teilkraftfluss der Crimpkraft angeordnet, während der Elastomerkörper oder das andere elastische Abstützelement in einem parallelen Teilkraftfluss angeordnet ist. Möglich ist auch, dass das elastische Abstützelement neben der Piezofolie angeordnet ist oder sogar in die Piezofolie integriert ist.

In der erfindungsgemäßen Crimpzange ist der Kraftsensor elektrisch mit einer Elektronik-Baueinheit verbunden ist. Der bewegliche Handhebel ist in einem Schwenklager an einem festen Zangenkörper verschwenkbar angelenkt ist. Beabstandet von diesem Schwenklager ist der bewegliche Handhebel in einem weiteren Schwenklager mit einem Druckhebel, der in dem anderen Endbereich mittels eines Schwenklagers an der beweglichen Zangenbacke angelenkt ist, verbunden. Die Schwenklager bilden die Schwenklager eines Kniehebeltriebs aus, welcher sich mit der Annäherung an die geschlossene Stellung seiner Strecklage annähert.

Erfindungsgemäß verfügt eine Elektronik-Baueinheit über einen Wegsensor, der ein an einem Gehäuse der Elektronik-Baueinheit angeordnetes erstes Sensorelement, insbesondere eine Platine, sowie ein zweites, an dem Druckhebel gehaltenes Sensorelement aufweist. Der Wegsensor erfasst die Relativbewegung der Sensorelemente über den Crimphub.

Für den Aufbau des Kraftsensors und die Integration der Piezofolie in denselben gibt es im Rahmen der Erfindung vielfältige Möglichkeiten. Für einen Vorschlag der Erfindung findet die Piezofolie Einsatz in einer Kraftsensoreinheit. In der Kraftsensoreinheit ist die Piezofolie sandwichartig zwischen einem Abstützkörper und einem Übertragungskörper aufgenommen. Hierbei ist der Abstützkörper an der Zangenbacke abgestützt oder von der Zangenbacke selbst ausgebildet. Hingegen ist an dem Übertragungskörper (unmittelbar oder mittelbar) die Gesenkhälfte abgestützt. Soll die Piezofolie lediglich eine Teilcrimpkraft aufnehmen, kann die Verzweigung des Kraftflusses einerseits auf die Piezofolie und andererseits auch ein parallelgeschaltetes Federelement innerhalb der Kraftsensoreinheit erfolgen. Möglich ist aber auch, dass lediglich ein Teilkraftfluss über die Kraftsensoreinheit und damit über die Piezofolie verläuft, während ein anderer Teilkraftfluss in mechanischer Parallelschaltung an der Kraftsensoreinheit vorbeigeführt ist.

Durchaus möglich ist, dass eine Gesenkhälfte fest mit der Crimpzange montiert ist und auch mit der Kraftsensoreinheit verbunden ist. Für einen weiteren Vorschlag der Erfindung ist die Gesenkhälfte auswechselbar, wobei grundsätzlich ein beliebiger Auswechsel-Mechanismus einsetzbar ist, wie diese aus dem Stand der Technik hinreichend bekannt sind. Für diese Ausgestaltung ist möglich, dass die Gesenkhälfte einen Gesenkrücken aufweist. Der Gesenkrücken wird mit der Crimpkraft oder der Crimpkraftkomponente an den Übertragungskörper angepresst. Der Übertragungskörper (und die den Übertragungskörper ausbildende Kraftsensoreinheit) ist in diesem Fall u. U. nicht auswechselbarer Bestandteil der Crimpzange und stellt eine geeignete Übertragungsfläche (oder eine Art "Schnittstelle" zwischen der auswechselbaren Gesenkhälfte und der nicht auswechselbaren Kraftsensoreinheit) bereit. Der Gesenkrücken der auswechselbaren Gesenkhälfte kommt an der Übertragungsfläche zur Anlage und wird an diese mit der Crimpkraft oder Crimpkraftkomponente angepresst. Vorzugsweise bildet der Übertragungskörper mit der Übertragungsfläche eine Art Schnittstelle zu der auswechselbaren Gesenkhälfte und damit mehreren sukzessive an der Crimpzange einsetzbaren Gesenkhälften. Hierbei kann der Gesenkrücken (und entsprechend auch die Übertragungsfläche des Übertragungskörpers) gesondert für eine gute Kraftübertragung ausgebildet sein. So kann beispielsweise der Gesenkrücken (und/oder die Übertragungsfläche des Übertragungskörpers) gesondert geschliffen oder gefräst sein, um eine möglichst großflächige Übertragung ohne Spannungsspitzen zu ermöglichen. Ebenfalls möglich ist, dass der Gesenkrücken (und/oder die Übertragungsfläche des Übertragungskörpers) eine Beschichtung aufweisen kann, welche für den auswechselbaren Kontakt und für die Übertragung der (Teil-)Crimpkraft eingesetzt ist. So kann beispielsweise eine derartige Beschichtung eine besondere Härte aufweisen oder Verschleißfestigkeit aufweisen oder auch eine Elastizität bereitstellen, um eine gute Anpassbarkeit an Fertigungstoleranzen der Gesenkhälfte und des Gesenkrückens zu gewährleisten.

Möglich ist durchaus, dass die (u. U: auswechselbare) Gesenkhälfte in montiertem Zustand an der Zangenbacke fixiert ist ohne verbleibenden Freiheitsgrad. Dies hat einerseits den Nachteil, dass sich die Ausrichtung der Gesenkhälften der Crimpzange für den Fall von über den Crimphub relativ zueinander verschwenkten Zangenbacken je nach Öffnungswinkel der Zangenbacken verändert, was für den Kontakt der Gesenkhälften und der von diesen ausgebildeten Gesenckonturen mit dem Werkstück nachteilig sein kann und zu einer Verschlechterung des Crimpergebnisses führen kann. Andererseits kann möglich sein, dass infolge der Verschwenkung der Zangenbacken die Orientierung der auf eine Zangenbacke wirkenden Crimpkraft über den Crimphub verändert wird, was zur Folge haben kann, dass ein Kraftsensor mit fester Orientierung gegenüber der Zangenbacke lediglich eine Teilkomponente der Crimpkraft misst, deren Anteil an der Crimpkraft über den Crimphub variiert, was zu einer Verringerung der Messgenauigkeit führt oder eine aufwendige Kompensation in Abhängigkeit des Crimphubs erfordert. Schließlich führt die feste Montage der Gesenkhälfte an der Zangenbacke zu Problemen bei der Leitung des (Teil-)Kraftflusses der Crimpkraft über den Kraftsensor.

Für eine besondere Ausführungsform der erfindungsgemäßen Crimpzange erfolgt keine feste fixierende Montage der Gesenkhälfte über mindestens ein Befestigungsmittel an der Zangenbacke. Vielmehr erfolgt die Montage der Gesenkhälfte über mindestens ein Befestigungsmittel mit einem Spiel an der Zangenbacke. Hierbei kann die Montage mit einem Spiel in Richtung der wirkenden Crimpkraft erfolgen. Diese Ausgestaltung hat zur Folge, dass infolge des Spiels die Crimpkraft nicht über das Befestigungsmittel unmittelbar an die Zangenbacke übertragen wird, sondern vielmehr trotz des Befestigungsmittels infolge des Spiels die Crimpkraft (zumindest teilweise) über den Kraftsensor und hier die Piezofolie abgestützt werden kann. Das mindestens eine Befestigungsmittel kann dabei im Extremfall lediglich zur Verliersicherung der Gesenkhälfte an der Zangenbacke dienen.

Alternativ oder zusätzlich möglich ist, dass das Spiel ein Schwenk-Freiheitsgrad der Gesenkhälfte gegenüber der Zangenbacke ist. Demgemäß ist die Gesenkhälfte über das mindestens eine Befestigungsmittel verschwenkbar um eine Schwenkachse an der Zangenbacke montiert, wobei die Schwenkachse vertikal zur wirkenden Crimpkraft und insbesondere vertikal zu einer Zangenkopfebene und zu Deckplatten der Crimpzange und/oder zu einer Schwenkebene von Handhebeln und/oder einer Zangenbacke der Crimpzange orientiert ist. Mittels des Schwenk-Freiheitsgrads kann unter Umständen gewährleistet werden, dass die Crimpkraft unabhängig von dem Durchlaufen des Crimphubs immer in dieselbe Richtung und insbesondere vertikal zu der Stirnseite der Gesenkhälfte auf die Gesenkhälfte wirkt. Andererseits kann der Schwenk-Freiheitsgrad auch vorteilhaft sein für die Abstützung der Gesenkhälfte an der Kraftsensoreinheit. Für die Kraftsensoreinheit ist es unter Umständen nachteilig, wenn die Crimpkraft nicht entsprechend der Flächennormale des Gesenkrückens und der Übertragungsfläche wirkt, da dann die Flächenpressung zwischen dem Gesenkrücken und der Übertragungsfläche des Übertragungskörpers nicht konstant über die Kontaktfläche verteilt wäre. Eine ungleichförmige Verteilung der Flächenpressung hätte dann aber zur Folge, dass Teilbereiche der Piezofolie mit Spannungsspitzen beaufschlagt werden, was zur Beschädigung der Piezofolie führen könnte oder eine Gestaltung des Kraftsensors und dessen Integration in die Crimpzange erfordern würde, für die die Kraftspitzen unterhalb der zulässigen Spannungen der Piezofolie liegen, womit dann aber eine Reduzierung der maximalen Crimpkraft, für welche der erfindungsgemäße Kraftsensor Einsatz finden kann, zur Folge hätte.

Möglich ist, dass die Gesenkhälfte über die Befestigungselemente (insbesondere Bolzen oder Schrauben) schwimmend an der Zangenbacke abgestützt ist und der schwimmende Freiheitsgrad durch die Anlage des Gesenkrückens der Gesenkhälfte an dem Übertragungskörper der Sensoreinheit reduziert oder beseitigt wird.

Alternativ oder kumulativ möglich ist, dass auch die Kraftsensoreinheit nicht an der Zangenbacke fixiert ist. Vielmehr schlägt die Erfindung für einen weiteren Vorschlag vor, dass die Kraftsensoreinheit verschwenkbar um eine Schwenkachse, die vertikal zur wirkenden Crimpkraft (und insbesondere vertikal zu einer Zangenkopfebene und der Schwenkebene der Handhebel oder einer Zangenbacke der Crimpzange) orientiert ist, an der Zangenbacke montiert ist. Hiermit können die zuvor erläuterten Effekte eine Vereinheitlichung der auf die Piezofolie wirkenden Flächenpressung, einer Gewährleistung derselben Orientierung der auf die Piezofolie wirkenden (Teil-)Crimpkraft und/oder eine Erhöhung der zulässigen maximalen Crimpkraft herbeigeführt oder unterstützt werden.

Für die Verbindung der Piezofolie mit dem Abstützkörper und dem Übertragungskörper gibt es vielfältige Möglichkeiten. So kann beispielsweise die Piezofolie lose zwischen diesen aufgenommen sein oder zwischen diesen verklemmt sein. Für einen Vorschlag der Erfindung ist die Piezofolie mit dem Abstützkörper und/oder mit dem Übertragungskörper verklebt.

Im Rahmen der Erfindung ist es durchaus möglich, dass die Gesenkhälfte und die Kraftsensoreinheit an einer beweglichen Zangenbacke befestigt sind. Vorzugsweise sind aber die Gesenkhälfte und die Kraftsensoreinheit an einer festen Zangenbacke oder an einem festen Zangenkörper, welcher die feste Zangenbacke ausbildet, abgestützt.

Erfindungsgemäß ist der Kraftsensor elektrisch mit einer Elektronik-Baueinheit verbunden, die der Verarbeitung, Speicherung oder Weitergabe des von dem Kraftsensor gemessenen Kraftsignals dienen kann. Um lediglich ein die Erfindung nicht beschränkendes Beispiel zu nennen, kann dabei die Elektronik-Baueinheit ausgebildet sein, wie diese in der nicht vorveröffentlichten europäischen Patentanmeldung mit dem amtlichen Aktenzeichen EP 18 173 803 (Veröffentlicht als EP3572188A1) der Anmelderin beschrieben ist, wo diese Elektronik-Baueinheit auch als "Tech-Pack" bezeichnet ist. Diese europäische Patentanmeldung wird insbesondere hinsichtlich
- der Gestaltung der Elektronik-Baueinheit,
- der Integration der Elektronik-Baueinheit in die Crimpzange,
- der von der Elektronik-Baueinheit durchgeführten Auswerteverfahren und
- der von der Elektronik-Baueinheit gewährleisteten Funktionen
von besonderer Bedeutung für das Verständnis der vorliegenden Anmeldung.

Erfindungsgemäß verfügt die Crimpzange über ein mechanisches Zangenteil, mittels dessen die eigentliche mechanische Crimpfunktion bereitgestellt werden kann und welche die mechanischen Bauelemente wie die relativ zueinander verschwenkbaren Handhebel, Zangenbacken und einen die Handhebel mit den Zangenbacken koppelnden Antriebsmechanismus aufweist. Separat von diesem mechanischen Zangenteil ist die Elektronik-Baueinheit ausgebildet, die auf mindestens einer Seite des Zangenkopfs der Crimpzange an das mechanische Zangenteil angesetzt und an diesem gehalten ist. Vorzugsweise erstreckt sich die Elektronik-Baueinheit auf zwei gegenüberliegenden Seiten des Zangenkopfs, wobei einzelne Bestandteile der Elektronik-Baueinheit wie beispielsweise zwei Teilplatinen jeweils auf einer Seite des Zangenkopfs angeordnet sein können und über ein um das mechanische Zangenteil teilweise herumgeführtes Verbindungskabel miteinander verbunden sein können. Hierbei kann die Elektronik-Baueinheit zwei halbschalenartige Gehäuseteile aufweisen, die sich in montiertem Zustand in Umfangsrichtung geschlossen um das mechanische Zangenteil erstrecken. Die Elektronik-Baueinheit kann auch ein Gehäuse aufweisen, welches einen für Licht durchlässigen oder teildurchlässigen Teilbereich aufweist, wobei in diesem Fall in Inneren des Gehäuses eine Leuchte angeordnet sein kann, die so angeordnet und ausgerichtet ist, dass von der Leuchte emittiertes Licht den durchlässigen oder teildurchlässigen Teilbereich beaufschlagt. Die Elektronik-Baueinheit kann eine Batterie oder einen Akkumulator zur Energieversorgung aufweisen, wobei die Batterie oder der Akkumulator auch in einen Handhebel integriert sein kann. Die Elektronik-Baueinheit kann weiteren Zwecken dienen und die hierfür erforderlichen Komponenten beinhalten. Ohne dass eine Beschränkung der Erfindung hierauf erfolgen soll, kann beispielsweise die Elektronik-Baueinheit eine GPS-Einheit aufweisen, um eine Lokalisierung der Crimpzange zu ermöglichen. Möglich ist, dass mittels der Elektronik-Baueinheit die Zahl der durchlaufenden Arbeitshübe ermittelt oder ausgewertet wird. Die Elektronik-Baueinheit kann zu einer Bewertung von Crimpprozessen, einer Speicherung von Sensordaten, einer Diebstahlsicherung, einer akustischen Ausgabe, einer elektronischen Einlegekontrolle für eine Kontrolle des richtigen Einlegens eines Werkstücks in das Gesenk der Crimpzange u. ä. ausgebildet sein. Hinsichtlich weiterer Details wird auf die nicht vorveröffentlichte europäische Patentanmeldung mit dem amtlichen Aktenzeichen EP 18 173 803 verwiesen.

Erfindungsgemäß ist in der Crimpzange neben dem Kraftsensor auch ein Wegsensor vorhanden, welcher einen Weg des Druckhebels des Antriebsmechanismus der Crimpzange über den Crimphub erfasst. Über den Wegsensor kann dann beispielsweise ausgewertet werden, wie viele Arbeitshübe die Crimpzange durchlaufen hat. So kann beispielsweise ein Gesenk oder die gesamte Crimpzange mit dem Erreichen einer vorbestimmten Zahl von durchlaufenden Arbeitshüben ausgetauscht werden. Andererseits kann es für die Prozessdokumentation und die Überwachung des Prozesses von Bedeutung sein, die Crimpkraft in Abhängigkeit des Weges, hier des Crimphubs zu erfassen und auszuwerten. So kann beispielsweise ein Vergleich einer Crimpkraft für einen vorgegebenen Crimpweg oder auch ein Vergleich von Verläufen der Crimpkraft über dem Crimpweg mit vorgegebenen Soll-Werten oder Soll-Verläufen erfolgen und aus diesem Vergleich ermittelt werden, ob der Crimpprozess ordnungsgemäß durchgeführt worden ist.

Ein weiterer Aspekt der Erfindung betrifft eine besondere Ausgestaltung einer Gesenkhälfte. Gemäß diesem Vorschlag findet eine Gesenkhälfte Einsatz, die zwei Gesenkhälftenteile aufweist. Hierbei kann ein Gesenkhälftenteil der Gewährleistung des Isolationscrimps, also der mechanischen Verbindung des Steckers mit der Isolierung des elektrischen Leiters, und das andere Gesenkhälftenteil für die Bereitstellung des Leitercrimps, also für die Gewährleistung der elektrischen Verbindung des Steckers mit dem elektrischen Leiter, dienen. Die beiden Gesenkhälftenteile sind dann über mindestens einen Querbolzen miteinander verbunden. Der Querbolzen steht auf beiden Seiten aus den Gesenkhälftenteilen hervor. Dieser Querbolzen wird dann aber nicht zwingend entsprechend dem Stand der Technik dazu genutzt, um die Gesenkhälfte starr an der Zangenbacke abzustützen. Vielmehr wird erfindungsgemäß zwischen dem Querbolzen und der Zangenbacke ein Spiel in Richtung der wirkenden Crimpkraft ausgebildet. Dieses Spiel hat zur Folge, dass die Übertragung der Crimpkraft nicht unmittelbar von der Gesenkhälfte über die Querbolzen zu der Zangenbacke erfolgt, womit diese nicht über den Kraftsensor geleitet werden würde. Vielmehr ermöglicht das Spiel, das zumindest eine Teilkomponente der Crimpkraft über den Kraftsensor verlaufen kann und von diesem gemessen werden kann.

Hinsichtlich der Ausstattung der Gesenkhälften mit einem derartigen Querbolzen wird insbesondere auf die Patentschrift DE 198 02 287 C1 der Anmelderin verwiesen. Die hier beschriebenen Gesenkhälften verfügen über einen aus der Zangenbacke hervorstehenden Gesenkbereich und einen in der Zangenbacke liegenden Flanschbereich. Einerseits verfügen der Flanschbereich und die Zangenbacke über eine fluchtende Bohrung, durch welche sich ein Bolzen oder eine Schraube zum Halten der Gesenkhälfte an der Zangenbacke erstrecken kann. Darüber hinaus verfügt die Gesenkhälfte im Übergangsbereich zwischen dem Gesenkbereich und dem Flanschbereich über zwei parallele Querbohrungen, durch welche sich parallele Querbolzen erstrecken, die in den Querbohrungen beispielsweise über eine Presspassung fixiert sein können. Während gemäß DE 198 02 287 C1 die freien Endbereiche der Querbolzen Aufnahme finden in randoffenen, insbesondere halbzylinderförmigen Aufnahmen der Zangenbacken, wird erfindungsgemäß zwischen diesen Querbolzen und etwaigen halbzylindrischen Aufnahmen der Zangenbacken ein Spiel ausgebildet. Für einen weiteren Vorschlag der Erfindung ist an der anderen Zangenbacke der Crimpzange eine andere Gesenkhäflte gehalten. Auch diese andere Gesenkhälfte weist zwei Gesenkhälftenteile auf. Die beiden Gesenkhälftenteile sind ebenfalls über mindestens einen Querbolzen miteinander verbunden, der auf beiden Seiten aus den Gesenkhälftenteilen der anderen Gesenkhälfte hervorsteht. Allerdings ist zwischen den Querbolzen und der anderen Zangenbacke kein Spiel in Richtung der wirkenden Crimpkraft ausgebildet. Vorzugsweise erfolgt an der anderen Zangenbacke die Abstützung der andere Gesenkhälfte über den mindestens einen Querbolzen unmittelbar und ohne Spiel in den zuvor erwähnten halbzylindrischen Aufnahmen der anderen Zangenbacke, wie dies in der Patentschrift DE 198 02 287 C1 beschrieben ist. Somit kann infolge des erläuterten Spiels zwischen der ersten Gesenkhälfte und der zugeordneten Zangenbacke der (Teil-)Kraftfluss von der Gesenkhälfte über den Kraftsensor zu der Zangenbacke erfolgen, während für die andere Zangenbacke der Kraftfluss der Crimpkraft unmittelbar von der Gesenkhälfte über die Zangenbacke verläuft.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt, aber nur die in den beigefügten Ansprüchen vorgesehenen Kombinationen sind Gegenstand der Erfindung. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Querbolzen oder einer Piezofolie die Rede ist, ist dies so zu verstehen, dass genau ein Querbolzen oder eine Piezofolie, zwei Querbolzen oder Piezofolien oder mehr Querbolzen oder Piezofolien vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer Seitenansicht eine Crimpzange in einer geöffneten Stellung.
- **Fig. 2**: zeigt in einer Seitenansicht die Crimpzange gemäß Fig. 1 in einer geschlossenen Stellung.
- **Fig. 3**: zeigt in einer räumlichen Ansicht die Crimpzange gemäß Fig. 1 und 2, wobei hier eine Deckplatte des Zangenkopfs demontiert ist.
- **Fig. 4**: zeigt ein Detail IV der Crimpzange gemäß Fig. 3.
- **Fig. 5**: zeigt eine in der Crimpzange gemäß Fig. 1 bis 4 eingesetzte Kraftsensoreinheit in einer räumlichen Explosionsdarstellung.
- **Fig. 6**: zeigt in einer räumlichen Darstellung eine Gesenkhälfte und eine Gesenkhälfte, die Einsatz finden in einer Crimpzange gemäß Fig. 1 bis 4.

### FIGURENBESCHREIBUNG

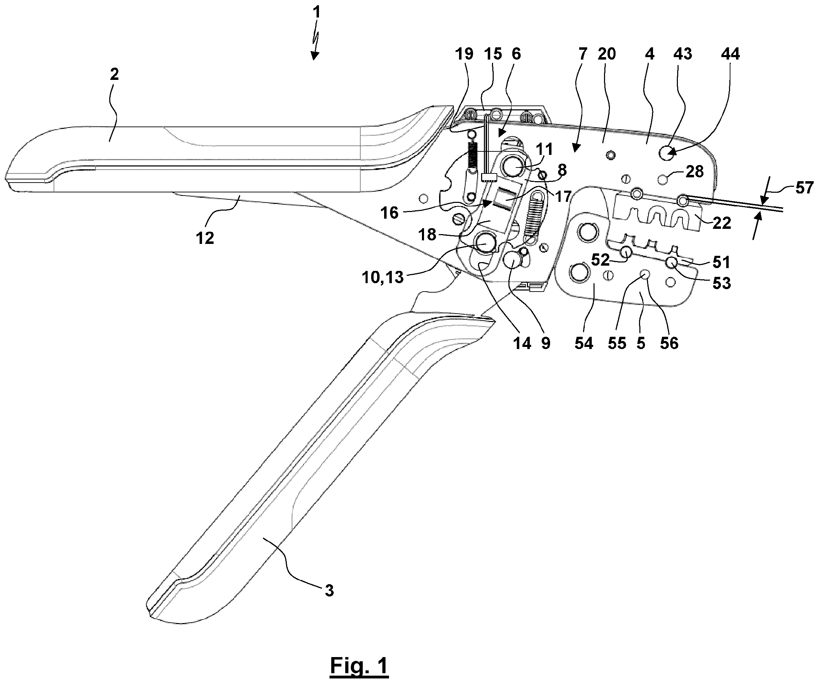

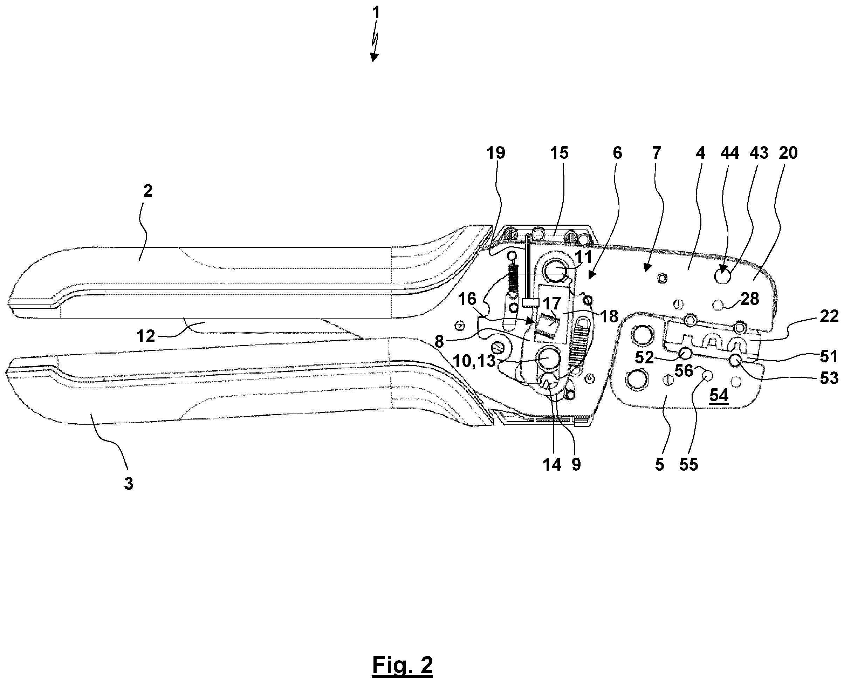

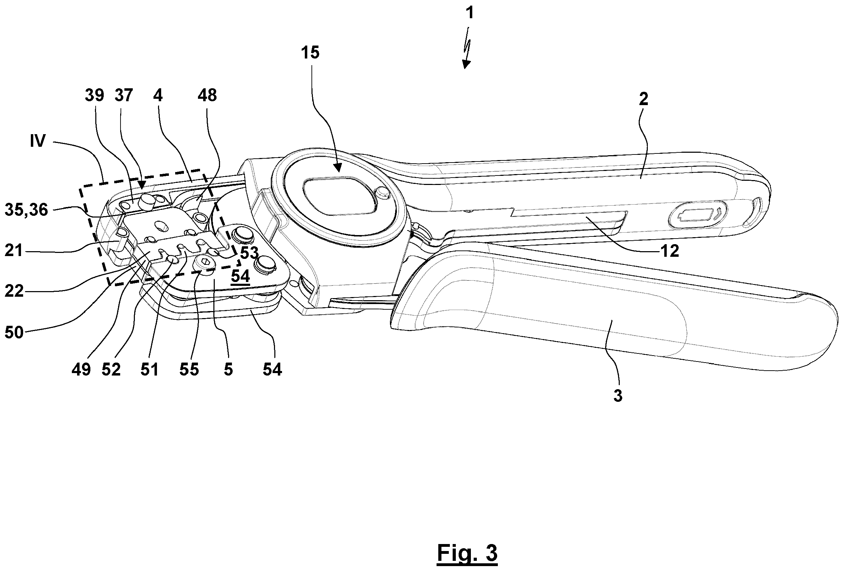

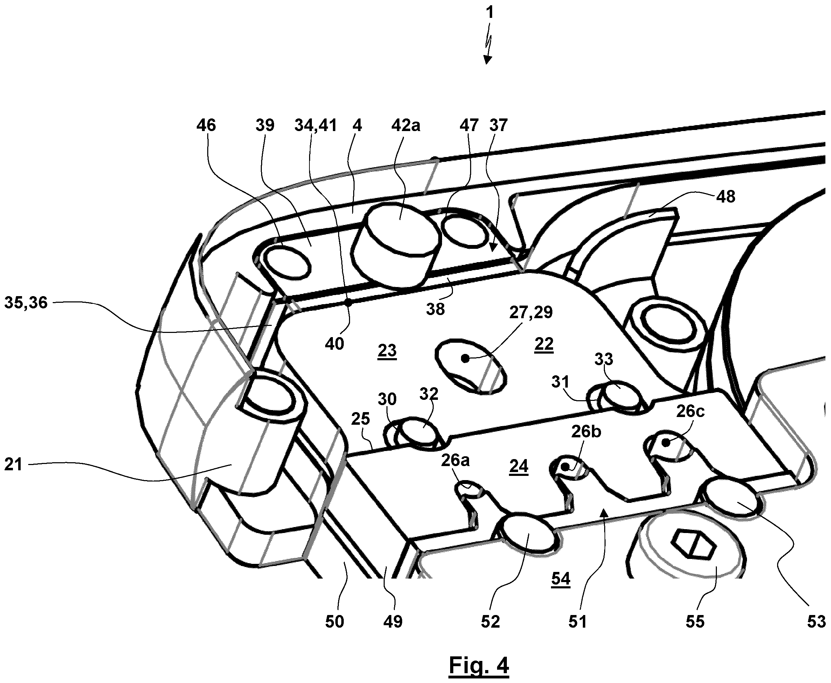

**Fig. 1 bis 4** zeigen eine Crimpzange 1, bei der eine Elektronik-Baueinheit 15 teildemontiert ist. Die Crimpzange 1 weist einen festen Handhebel 2 und einen beweglichen Handhebel 3 sowie eine feste Zangenbacke 4 sowie eine bewegliche Zangenbacke 5 auf. Die Handhebel 2, 3 sind mit den Zangenbacken 4, 5 mittels eines Antriebsmechanismus 6 gekoppelt. Der Antriebsmechanismus 6 wandelt eine Schließbewegung der Handhebel 2, 3 von der geöffneten Stellung in Fig. 1 in die geschlossene Stellung in Fig. 2 über einen Crimphub um in eine Schließbewegung der Zangenbacken 4, 5. Der Antriebsmechanismus 6 verfügt insbesondere über einen Kniehebeltrieb. Des Weiteren kann der Antriebsmechanismus 6 ein sogenanntes Zwangsgesperre aufweisen, mittels dessen ein einmal erreichter Teilcrimphub auch bei (zumindest teilweiser) Entfernung der auf die Handhebel 2, 3 applizierten Handkräfte gegenüber einer unerwünschten Öffnung gesichert ist und/oder gewährleistet wird, dass eine Wiederöffnung der Handhebel 2, 3 und der Zangenbacken 4, 5 nur mit Erreichen einer vorbestimmten Schließstellung am Ende des Crimphubs möglich ist. Vorzugsweise sind der feste Handhebel 2 und die feste Zangenbacke 4 Bestandteil eines festen Zangenkörpers 7, an welchem die bewegliche Zangenbacke 5 und ein Druckhebel 8 verschwenkbar angelenkt sind.

Der bewegliche Handhebel 3 ist in einem Schwenklager 9 an dem festen Zangenkörper 7 verschwenkbar angelenkt. Beabstandet von diesem Schwenklager 9 ist der bewegliche Handhebel 3 in einem weiteren Schwenklager 10 mit dem Druckhebel 8 verbunden, der in dem anderen Endbereich mittels eines Schwenklagers 11 an der beweglichen Zangenbacke 4 angelenkt ist. Die Schwenklager 9, 10, 11 bilden die Schwenklager eines Kniehebeltriebs, welcher sich mit der Annäherung an die geschlossene Stellung gemäß Fig. 2 seiner Strecklage annähert.

Möglich ist, dass die Crimpzange 1 einen weiteren Handhebel 12 aufweist, der sich teilweise im Inneren des festen Handhebels 2 erstreckt und der fest mit der festen Zangenbacke 4 verbunden ist. Eine Betätigung des Handhebels 12 in Richtung des Handhebels 2 hat zur Folge, dass ohne Veränderung der Relativlage der Handhebel 2, 3 die Zangenbacken 4, 5 von einer Ausgangsstellung in eine (erweiterte) Öffnungsstellung überführt werden, die zum Einlegen des Werkstücks in das Zangenmaul genutzt werden kann. Wird die auf den Handhebel 12 aufgebrachte Kraft beseitigt, bringt eine Feder den dritten Handhebel 12 wieder zurück in die Ausgangsstellung, womit gleichzeitig die Zangenbacke 5 in die Ausgangsstellung zurückkehrt oder vor Erreichen der Ausgangsstellung ein Werkstück in dem Zangenmaul eingeklemmt wird. Um diese Bewegung der Zangenbacke 5 durch Betätigung des Handhebels 12 in die erweiterte Öffnungsstellung zu ermöglichen, verfügt das Schwenklager 10 des Druckhebels 8 über einen Freiheitsgrad, der für das dargestellte Ausführungsbeispiel dadurch bereitgestellt wird, dass ein Schwenkbolzen 13 des Schwenklagers 10 in einem Langloch 14 des Druckhebels 8 geführt ist. Andererseits kann in der Crimpzange 1 auch eine Öffnungsfeder vorgesehen sein, welche mit Erreichen der Schließstellung die Crimpzange 1 automatisch wieder in die Ausgangsstellung oder Öffnungsstellung überführt. Die Gewährleistung der Ausgangsstellung, die Erzeugung einer Schließkraft von der erweiterten Öffnungsstellung in die Ausgangsstellung sowie einer Öffnungskraft von einer Schließstellung in die Ausgangsstellung kann mittels einer Wechselwirkung der Federn mit geeigneten Anschlägen gewährleistet werden. Hierbei sind die Federn infolge der Anschläge lediglich in einem Teilhub (nämlich einerseits in dem Teilhub zwischen der Ausgangsstellung und der Schließstellung und andererseits in dem Teilhub zwischen der Ausgangsstellung und der erweiterten Öffnungsstellung) wirksam.

Hinsichtlich der Gestaltung des Kniehebeltriebs und des mechanischen Zangenteils, der Gewährleistung der Ausgangsstellung, der Integration des dritten Handhebels 12 in die Crimpzange 1, der unterschiedlichen Federn und der Anschläge der Führung des Schwenkbolzens 13 in dem Langloch 14 wird verwiesen auf EP3614507A1.

An dem mechanischen Zangenteil mit den mechanischen Komponenten, die für die Herbeiführung des eigentlichen Crimpprozesses und die Öffnung der Crimpzange 1 verantwortlich sind, ist eine Elektronik-Baueinheit 15 oder ein "Tech-Pack" befestigt. Die Elektronik-Baueinheit 15 ist dabei im Bereich des Zangenkopfs und in einem Abschnitt zwischen dem Zangenmaul und den Handhebeln 2, 3 angeordnet. Die Elektronik-Baueinheit erstreckt sich vorzugsweise ringförmig um das mechanische Zangenteil im Bereich des Zangenkopfs. Die Elektronik-Baueinheit 15 kann dabei über eine elektronische Steuereinheit, ein Eingabeelement wie einen Schalter, einen Taster u. ä., ein Ausgabeelement oder ein Display, eine Leuchte, ein akustisches Ausgabeelement oder einen Sensor verfügen. Bei dem Sensor handelt es sich insbesondere um einen Wegsensor 16. Für das dargestellte Ausführungsbeispiel weist der Wegsensor 16 ein an dem Gehäuse der Elektronik-Baueinheit 15 angeordnetes erstes Sensorelement 17, insbesondere eine Platine sowie ein zweites, an dem Druckhebel 8 gehaltenes Sensorelement 18 auf. Der Wegsensor 16 erfasst in diesem Fall die Relativbewegung der Sensorelemente 17, 18 über den Crimphub. Vorzugsweise ist auf gegenüberliegenden Seiten des mechanischen Zangenteils jeweils eine (Teil-)Platine angeordnet, die dann über ein Verbindungskabel 19 miteinander verbunden sein können. Die Elektronik-Baueinheit kann zwei halbschalenartige Gehäuseteile aufweisen, die sich in montiertem Zustand in Umfangsrichtung geschlossen um das mechanische Zangenteil erstrecken. Das Gehäuse der Elektronik-Baueinheit 15 kann einen für Licht durchlässigen oder teildurchlässigen Teilbereich aufweisen. In diesem Fall kann im Inneren des Gehäuses eine Leuchte angeordnet sein, die so angeordnet und ausgerichtet ist, dass von der Leuchte emittiertes Licht den durchlässigen oder teildurchlässigen Teilbereich beaufschlagt und zumindest teilweise durchdringt. Die elektronische Steuereinheit kann Steuerlogik aufweisen, die einen Ladezustand einer Batterie oder eines Akkumulators auswertet, eine Zahl von durchlaufenden Arbeitshüben ermittelt oder auswertet, eine Bewertung eines mit dem Zangenwerkzeug durchgeführten Bearbeitungsvorgangs vornimmt, Daten speichern kann, in einem Standby-Modus bei einer über einen Beschleunigungssensor erkannten Bewegung der Crimpzange 1 einen Bereitschaftsmodus aktivieren kann, bei einer Erfassung, dass für eine vorgegebene erste Zeitspanne keine Betätigung der Crimpzange erfolgt ist oder für eine vorgegebene zweite Zeitspanne keine Bewegung der Crimpzange 1 erfolgt ist, ein Display oder eine Leuchte deaktivieren, wobei die erste Zeitspanne länger sein kann als die zweite Zeitspanne, eine drahtlose Sende- und/oder Empfangseinrichtung betreiben, mittels einer Leuchte den Ladezustand einer Batterie oder eines Akkumulators anzeigen, eine Konfiguration der Crimpzange 1 mit dem Aufspielen von Betriebsparametern ermöglicht, das Erreichen einer Schließstellung der Handhebel 2, 3 erfassen, eine Ortungsfunktion für die Ortung der Crimpzange 1 steuern, eine Diebstahlsicherung der Crimpzange steuern, indem diese außer Funktion gesetzt werden kann, eine akustische Ausgabe der Crimpzange 1 steuern, eine elektronische Einlegekontrolle für eine Kontrolle des bestimmungsgemäßen Einlegens eines Werkstücks in das Zangenmaul durchführen und/oder an einer Anzeige eine Anzeige erzeugen, welche ein Name oder eine Kennzeichnung eines Herstellers, eines Besitzers oder eines Benutzers sein kann, ein Ladezustand einer Batterie oder eines Akkumulators sein kann, eine gemessene Crimpkraft oder ein gemessener Crimpweg oder ein Verlauf derselben sein kann, eine Zahl der durchlaufenden Arbeitshübe sein kann, das Ergebnis einer Bewertung eines mit der Crimpzange 1 durchgeführten Crimpprozesses sein kann und/oder ein Hinweis hinsichtlich einer erforderlichen Wartung der Crimpzange 1 sein kann oder hiermit korrelieren kann. Hinsichtlich der Ausgestaltung der Elektronik-Baueinheit, deren Wechselwirkung mit dem mechanischen Zangenteil der Crimpzange 1 und den mittels der Elektronik-Baueinheit gewährleisteten Funktionen wird verwiesen auf EP3572188A1.

Möglich ist des Weiteren, dass die Crimpzange 1 über die Elektronik-Baueinheit drahtlos mit einer externen elektronischen Steuereinheit, insbesondere einem Smartphone oder einem Rechner in der Arbeitsumgebung der Crimpzange 1, kommuniziert, während ergänzend möglich ist, dass diese externe elektronische Steuereinheit wiederum mit einem Cloud-Speicher kommuniziert. Diese Kommunikationswege können insbesondere zur Dokumentation der Crimpprozesse, der eingesetzten Gesenke, der Crimpkraftverläufe und/oder der Crimpwege, der Zahl der von der Crimpzange oder einem Gesenk durchlaufenden Crimphube u. ä. verwendet werden. Möglich ist auch, dass die Elektronik-Baueinheit oder die Crimpzange eine Erfassungseinrichtung aufweist, welche zur Erfassung einer Kennzeichnung der Gesenkhälfte(n) eingerichtet ist. Diese Erfassungseinrichtung kann benachbart der Gesenkhälfte angeordnet sein. Bei der Erfassungseinrichtung kann es sich um eine Leseeinrichtung für eine Kennzeichnung in Form einer optischen Codierung einer Gesenkhälfte, eine mechanische Abtasteinrichtung für eine mechanische Kontaktkontur der Gesenkhälfte, eine Empfangseinheit für den Empfang einer Kennzeichnung von einer RFID-Einheit der Gesenkhälfte oder eine Erfassungseinrichtung für eine Kennzeichnung mittels einer induktiven Kopplung zwischen der Gesenkhälfte und der Erfassungseinrichtung handeln. Die Kennzeichnung der Gesenkhälfte kann eine Kennzeichnung des Typs der Gesenkhälfte, eine eindeutige spezifische Kennzeichnung der Gesenkhälfte und/oder eine Authentifizierung der Gesenkhälfte sein. Möglich ist, dass über die zuvor genannten Kommunikationswege nach Erfassung einer Kennzeichnung einer Gesenkhälfte eine Liste von Werkstücken erstellt wird, die mittels der erfassten Gesenkhälfte vercrimpt werden können, wobei diese Typen von Werkstücken dann an einer Anzeige der Crimpzange oder an der externen elektronischen Steuereinheit angezeigt werden können. Möglich ist auch, dass neben der Erfassung der Gesenkhälfte über die Kennzeichnung auch ein Typ eines Werkstücks, beispielsweise über eine Bilderkennung auf Grundlage eines Kamerabilds, erfolgt. In diesem Fall kann mittels der Steuerlogik der Elektronik-Baueinheit 15 und/oder der externen elektronischen Steuereinheit geprüft werden, ob die erkannte Gesenkhälfte geeignet ist für ein Vercrimpen des erkannten Typs des Werkstücks, was dann dem Benutzer optisch oder akustisch an der Crimpzange oder der externen elektronischen Steuereinheit zur Kenntnis gebracht werden kann. Hinsichtlich dieser und weiterer Ausgestaltungsmöglichkeiten der Erfassungseinrichtung für eine Kennzeichnung einer Gesenkhälfte und die Kommunikation der Crimpzange 1 mit einer externen elektronischen Steuereinheit und unter Umständen über diese mit einem Cloud-Speicher und Möglichkeiten der Auswertung und Bestimmung geeigneter Kombinationen von Gesenkhälften und Werkstücken wird Bezug genommen auf EP3656504A1.

Vorzugsweise sind die genannten Bauelemente der Crimpzange 1 bzw. des mechanischen Zangenteils derselben in Plattenbauweise ausgebildet, wobei diese Bauelemente auch mit mehreren parallel zueinander angeordneten Platten gebildet sein können.

Die feste Zangenbacke 4 und hier auch der feste Zangenkörper 7 verfügen über zwei (hier metallische) parallel zueinander mit einem Abstand angeordnete Deckplatten 20. In dem vorderen Endbereich der festen Zangenbacke 4 wird der Abstand der Deckplatten 20 vorgegeben durch eine Längserstreckung einer Hülse 21, durch die die Deckplatten 20 miteinander verschraubt oder verstiftet sind. In dem Zwischenraum zwischen den Deckplatten 20 ist mit einem eine Relativbewegung ermöglichenden Spiel vertikal zu der Schwenkebene der Zangenbacke 5 eine Gesenkhälfte 22 aufgenommen.

Die Gesenkhälfte 22 verfügt über einen Flanschbereich 23, der sich bei Einsatz der Gesenkhälfte 22 in die Crimpzange 1 zwischen den Deckplatten 20 erstreckt. Des Weiteren weist die Gesenkhälfte 22 einen Gesenkbereich 24 auf. Der Übergang des Flanschbereichs 23 zu dem Gesenkbereich 24 kann über eine Stufe 25 erfolgen. In dem Gesenkbereich 24 bildet die Gesenkhälfte 22 mindestens eine Gesenkkontur 26, hier drei nebeneinander angeordnete Gesenkkonturen 26a, 26b, 26c mit unterschiedlicher Geometrie für unterschiedliche Werkstücke, aus. In dem Flanschbereich 23 ist eine Durchgangsausnehmung 27 vorhanden. Wird die Durchgangsausnehmung 27 fluchtend zu einer zugeordneten Befestigungsbohrung 28 der Deckplatten 20 angeordnet, kann mittels eines Bolzens, eines Stiftes oder einer Schraube eine verliersichere Befestigung der Gesenkhälfte 22 an den Deckplatten 20 erfolgen. Aus im Folgenden noch näher erläuterten Gründen ist die Durchgangsausnehmung 27 als Langloch 29 ausgebildet. In dem dem Gesenkbereich 24 zugewandten Endbereich des Flanschbereichs 23 oder im Bereich der Stufe 25 verfügt die Gesenkhälfte 22 über zwei parallele Durchgangsbohrungen 30, 31, durch die sich Querbolzen 32, 33 erstrecken. Die Querbolzen 32, 33 sind insbesondere über eine Presspassung in den Durchgangsbohrungen 30, 31 oder anderweitig fixiert. Die Querbolzen 32, 33 stehen auf beiden Seiten aus dem Flanschbereich 23 heraus.

Die Gesenkhälfte 22 verfügt über einen Gesenkrücken 34. Der Gesenkrücken 34 verfügt über eine Flächennormale, die der Richtung der Crimpkraft entspricht. Für das dargestellte Ausführungsbeispiel ist der Gesenkrücken 34 von der dem Gesenkbereich 24 abgewandten Stirnseite des Flanschbereichs 23 gebildet. Ein Gesenkrücken 34 kann aber auch von einer entsprechenden Stufe der Gesenkhälfte 22 ausgebildet sein.

Die Crimpzange 1 verfügt des Weiteren über eine Kraftsensor 35, der eine Piezofolie 36 aufweist oder aus dieser besteht. Der Kraftsensor 35 ist Bestandteil einer Kraftsensoreinheit 37. In der Kraftsensoreinheit 37 ist die Piezofolie 36 sandwichartig zwischen einem Übertragungskörper 38 und einem Abstützkörper 39 angeordnet, wobei vorzugsweise die Piezofolie 36 mit dem Übertragungskörper 38 und dem Abstützkörper 39 verklebt ist.

Der Übertragungskörper 38 ist plattenförmig ausgebildet und weist vorzugsweise eine Erstreckung in Richtung der wirkenden Crimpkraft von 1.0 mm ± 40 %, ± 30 %, ± 20 % oder ± 10 % auf. Der Übertragungskörper 38 bildet an der der Gesenkhälfte 22 zugewandten Seite eine ebene Übertragungsfläche 40 aus. An die Übertragungsfläche 40 des Übertragungskörpers 38 wird mit der Crimpkraft eine von dem Gesenkrücken 34 ausgebildete Rückenfläche 41 angepresst.

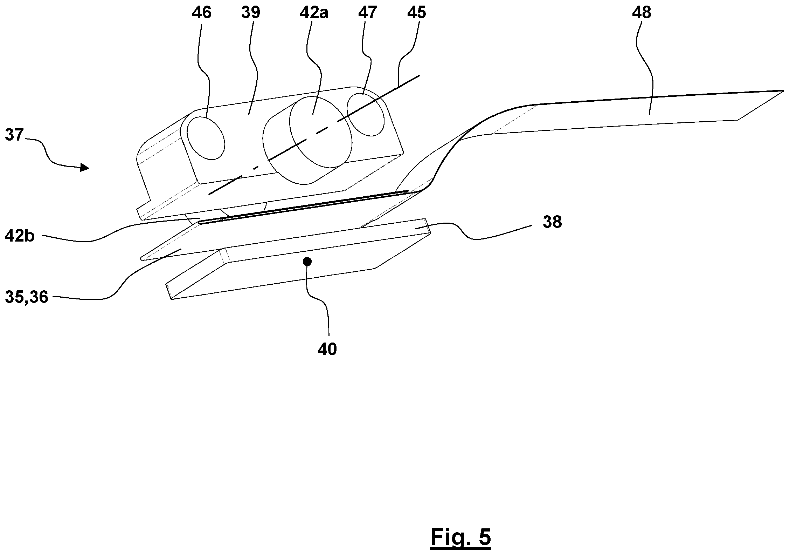

Der Abstützkörper 39 weist auf beiden Seiten quer zur Crimpkraft und zur Schwenkebene der Zangenbacke 5 orientierten Schwenkzapfen 42a, 42b (s. Fig. 5) auf, die jeweils aufgenommen sind in einem Lagerauge 43 der Deckplatten 20. Auf diese Weise ist ein Schwenklager 44 gebildet, mittels dessen der Abstützkörper 39 gegenüber den Deckplatten 20 verschwenkbar um eine durch die Schwenkzapfen 42 vorgegebene Schwenkachse 45 gelagert ist. Hingegen ist infolge des Schwenklagers 44 die Lage der Schwenkachse 45 des Abstützkörpers 39 gegenüber den Deckplatten 20 fixiert. Optional kann der Abstützkörper 39 abseits des Lageauges 43 mindestens eine weitere Bohrung 46, 47 aufweisen. Durch die Bohrungen 46, 47 können sich Bolzen oder Stifte erstrecken, mittels welchen die Verschwenkung des Abstützkörpers 39 um die Schwenkachse 45 einseitig oder beidseitig begrenzt werden kann, indem die sich durch die Bohrungen 46, 47 erstreckenden Bolzen oder Stifte zur Anlage kommen an Anschläge der Deckplatten 20.

Die Piezofolie 36 kann über ein Verbindungskabel 48 mit der Elektronik-Baueinheit 15 verbunden sein. Mittels der Elektronik-Baueinheit 15 kann eine Signalverarbeitung und Auswertung des Signals der Piezofolie 36 und damit eine Ermittlung der Crimpkraft erfolgen.

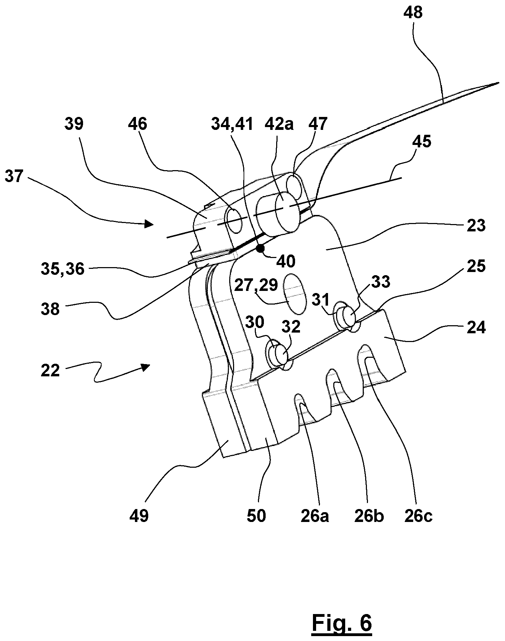

Für das hier dargestellte Ausführungsbeispiel ist die Gesenkhälfte 22 mit zwei plattenförmigen Gesenkhälftenteilen 49, 50 ausgebildet (s. **Fig. 6**). Hierbei bildet ein Gesenkhälftenteil 49 die Gesenkkontur für den Isolationscrimp aus, während das andere Gesenkhälftenteil 50 die Gesenkkontur für den Leitercrimp ausbildet. Die Pressverbindung der Querbolzen 32, 33 mit den Durchgangsbohrungen 30, 31 dienen der festen Verbindung der Gesenkhälftenteile 49, 50 miteinander.

Die Gesenkhälfte 22, die mit der Kraftsensoreinheit 37 in Wechselwirkung tritt und an der festen Zangenbacke 4 abgestützt ist, tritt mit dem Durchlaufen des Crimphubs in Wechselwirkung mit einer anderen Gesenkhälfte 51, die an der anderen Zangenbacke 5 gehalten ist. Die Gesenckonturen der Gesenkhälften 22, 51 bilden gemeinsam ein Gesenk, in welchem das Werkstück vercrimpt wird. Auch die Gesenkhälfte 51 verfügt über Querbolzen 52, 53. Ein Flanschbereich der Gesenkhälfte 51 ist aufgenommen zwischen Zangenbackenplatten 54 der Zangenbacke 5.

Die Zangenbackenplatten 54 bilden (vorzugsweise halbzylindrische) Aufnahmen für die Querbolzen 52, 53, in denen die Gesenkhälfte 51 mit der Crimpkraft unmittelbar an den Zangenbackenplatten 54 und damit der Zangenbacke 5 abgestützt ist. Zusätzlich erfolgt eine Befestigung der Gesenkhälfte 51 mittels einer Befestigungsschraube oder eines Bolzens 55, der sich durch fluchtende Bohrungen 56 der Zangenbackenplatten 54 und der Gesenkhälfte 51 erstreckt.

Die Schwenkachse 45 und die Schwenkzapfen 42a, 42b des Abstützkörpers 39 sind derart an den Deckplatten 20 angeordnet und gelagert, dass bei Abstützung der Gesenkhälfte 22 an der Kraftsensoreinheit 37 die auskragenden Endbereiche der Querbolzen 32, 33 mit einem Spiel 57 zu den Deckplatten 20 (insbesondere zu halbzylinderförmigen Aufnahmen derselben) angeordnet sind.

Die Funktionsweise der Crimpzange 1 mit der Kraftsensoreinheit 37 ist wie folgt: Mit dem Einsetzen der Gesenkhälfte 22 zwischen die Deckplatten 20 kommt der Gesenkrücken 34 der Gesenkhälfte 22 mit der Rückenfläche 41 zur Anlage an die Übertragungsfläche 40 des Übertragungskörpers 38, ohne dass die Querbolzen 32, 33 an den Deckplatten 20 abgestützt sind. Vielmehr erfolgt in Richtung der wirkenden Crimpkraft ausschließlich eine Abstützung der Gesenkhälfte 22 an dem Übertragungskörper 38. Infolge der zusätzlichen Befestigung über einen Bolzen oder eine Schraube durch das Langloch 29 der Gesenkhälfte 22 und die Befestigungsbohrung 28 der Deckplatten 20 ist die Gesenkhälfte 22 zwar verliersicher an den Deckplatten 20 gehalten. Es erfolgt aber keine Abstützung der Crimpkraft über den Bolzen oder die Schraube, der bzw. die sich durch das Langloch 29 erstreckt, und über die Querbolzen 32, 33. Mit einer Erhöhung der Crimpkraft mit dem Durchlaufen des Crimphubs wird die Crimpkraft von der Gesenkhälfte 22 über die Rückenfläche 41 derselben an die Übertragungsfläche 40 des Übertragungskörpers 38 und damit auf die Piezofolie 36 übertragen, deren Signal dann über das Verbindungskabel 48 an die Elektronik-Baueinheit 15 übertragen wird. Infolge der Lagerung des Abstützkörpers 39 über ein Schwenklager 44 an der Zangenbacke 4 kann sich der Abstützkörper 39 (und damit auch die Gesenkhälfte 22) selbsttätig so ausrichten, dass die Crimpkraft vertikal zu der Übertragungsfläche 40 und damit der Piezofolie 36 ausgerichtet ist. Möglich ist, dass bei dieser Ausrichtung der Abstützkörper 39 und die Gesenkhälfte 22 gemeinsam um die Schwenkachse 45 verschwenkt werden. Diese Verschwenkung kann ausschließlich mit der Montage erfolgen oder auch während des Crimphubs je nach wirkender Richtung der Crimpkraft erfolgen. Möglich ist aber auch, dass zusätzlich zu der Ausrichtung eine Gleitbewegung zwischen der Gesenkhälfte 22 und der Kraftsensoreinheit 37 in einer Querebene zur wirkenden Crimpkraft erfolgt, indem es zu einer Gleitbewegung in der Kontaktfläche zwischen der Übertragungsfläche 40 und der Rückenfläche 41 kommt.

Hingegen erfolgt für die andere Gesenkhälfte 51 eine unmittelbare Abstützung dieser Gesenkhäfte 51 über die Querbolzen 52, 53 an der Zangenbacke 5, hier den Zangenbackenplatten 54. Möglich ist, dass die Piezofolie 36 (insbesondere zwischen dem Übertragungskörper 38 und dem Abstützkörper 39) zu mindestens zwei Lagen mit gleichen Sensorflächen gefaltet ist. Beide Sensorflächen werden dann mit der Crimpkraft und der zugeordneten Flächenpressung beaufschlagt, womit die durch die Crimpkraft hervorgerufene Ladungsänderung der Piezoelemente vergrößert wird und die Sensitivität des Kraftsensors erhöht werden kann.

In der Crimpzange 1 kann eine L-förmige Zangenbackenplatte Einsatz finden. Hinsichtlich der diesbezüglichen Gestaltung und der Verbindung der L-förmigen Zangenbackenplatte mit weiteren Komponenten über Befestigungsbolzen und die erzielbaren Vorteile wird verwiesen auf die europäische Patentanmeldung EP353900.

Möglich ist, dass zwei unterschiedliche Teilgruppen von Crimpzangen vorhanden sind: Crimpzangen einer ersten Teilgruppe verfügen über zwei Gesenkhälften mit jeweils zwei Gesenkteilen, welche wie zuvor erläutert, jeweils über mindestens einen Querbolzen miteinander verbunden sind, der auf beiden Seiten aus den Gesenkhälftenteilen hervorsteht. Für die Crimpzangen dieser ersten Teilgruppe erfolgt über die Querbolzen der beiden Gesenkhälften jeweils ohne Spiel eine unmittelbare Abstützung der Crimpkraft an der zugeordneten Zangenbacke. In diesem Fall verläuft also kein Kraftfluss über eine anderen Weg und insbesondere über eine Kraftsensor, so dass vorzugsweise die Crimpzangen der ersten Teilgruppe ohne Kraftsensor ausgebildet sind.

Hingegen sind die Crimpzangen der zweiten Teilgruppe wie zuvor erläutert ausgebildet, so dass in diesem Fall eine Gesenkhäfte unmittelbar über die zugeordneten Querbolzen an der Zangenbacke abgestützt ist, während die andere Gesenkhälfte infolge des Spiels zwischen der Gesenkhälfte und der Zangenbacke über den Kraftsensor abgestützt ist.

Vorzugsweise kann für die Crimpzangen der beiden Teilgruppe eine große Zahl von gleichen Komponenten eingesetzt werden, womit sich der Herstellungsaufwand und der Aufwand für eine Bevorratung der Komponenten verringert. Dies gilt, obwohl die Crimpzangen der ersten Teilgruppe ohne Kraftsensor ausgebildet sind, während die Crimpzangen der zweiten Teilgruppe einen Kraftsensor aufweisen.

Möglich ist auch, dass Gesenkhälfte zwei Gesenkhälftenteile aufweist, die über mindestens einen Querbolzen miteinander verbunden sind, der auf beiden Seiten aus den Gesenkhälftenteilen hervorsteht, und eine quer zur Crimpkraft orientierte Rückenfläche aufweist: die Gesenkhälfte kann multifunktional in einer ersten Verwendung oder aber in einer zweiten Verwendung verwendet werden:
In einer ersten Verwendung erfolgt der Einsatz der Gesenkhälfte für eine Crimpzange, bei der der Querbolzen ohne Spiel in Richtung der wirkenden Crimpkraft jeweils an der zugeordneten Zangenbacke abgestützt ist, so dass die Crimpkraft über den Querbolzen übertragen werden kann, während keine Crimpkraft über die Rückenfläche übertragen wird. Vorzugsweise findet in der ersten Verwendung die Gesenkhälfte somit Einsatz in einer Crimpzange, in welcher kein Kraftsensor Einsatz findet, oder an einer Zangenbacke, an der nicht der Kraftsensor abgestützt ist.

Dieselbe Gesenkhälfte kann aber in der zweiten Verwendung eingesetzt werden für eine Crimzange, bei der der Querbolzen und die Zangenbacke ein Spiel in Richtung der wirkenden Crimpkraft ausbilden. In diesem Fall überträgt der Querbolzen keine Crimpkraft auf die Zangenbacke. Stattdessen erfolgt die Übertragung der Crimpkraft oder der Crimpkraftkomponente über die Rückenfläche. Durch die erfindungsgemäße Multifunktionalität der Gesenkhälfte kann diese unabhängig davon hergestellt, bevorratet und/oder vertrieben werden, ob diese Einsatz findet an einer Zangenbacke, die mit einem Kraftsensor ausgestattet ist, oder einer Zangenbacke, an der kein Kraftsensor abgestützt ist und somit die unmittelbare Übertragung der Crimpkraft von der Gesenkhälfte zu der Zangenbacke erfolgen kann.

### BEZUGSZEICHENLISTE

- 1: Crimpzange
- 2: fester Handhebel
- 3: beweglicher Handhebel
- 4: feste Zangenbacke
- 5: bewegliche Zangenbacke
- 6: Antriebsmechanismus
- 7: fester Zangenkörper
- 8: Druckhebel
- 9: Schwenklager
- 10: Schwenklager
- 11: Schwenklager
- 12: dritter Handhebel
- 13: Schwenkbolzen
- 14: Langloch
- 15: Elektronik-Baueinheit
- 16: Wegsensor
- 17: Sensorelement
- 18: Sensorelement
- 19: Verbindungskabel
- 20: Deckplatte
- 21: Hülse
- 22: Gesenkhälfte
- 23: Flanschbereich
- 24: Gesenkbereich
- 25: Stufe
- 26: Gesenkkontur
- 27: Durchgangsausnehmung
- 28: Befestigungsbohrung
- 29: Langloch
- 30: Durchgangsbohrung
- 31: Durchgangsbohrung
- 32: Querbolzen
- 33: Querbolzen
- 34: Gesenkrücken
- 35: Kraftsensor
- 36: Piezofolie
- 37: Kraftsensoreinheit
- 38: Übertragungskörper
- 39: Abstützkörper
- 40: Übertragungsfläche
- 41: Rückenfläche
- 42: Schwenkzapfen
- 43: Lagerauge
- 44: Schwenklager
- 45: Schwenkachse
- 46: Bohrung
- 47: Bohrung
- 48: Verbindungkabel
- 49: Gesenkhälftenteil
- 50: Gesenkhälftenteil
- 51: Gesenkhälfte
- 52: Querbolzen
- 53: Querbolzen
- 54: Zangenbackenplatte
- 55: Bolzen
- 56: Bohrung
- 57: Spiel

## Patentansprüche

1. Crimpzange (1) mit
a) einer Zangenbacke (4),
b) einer an der Zangenbacke (4) abstützbaren oder abgestützten Gesenkhälfte (22) und
c) einem Kraftsensor (35) zur Messung der auf die Gesenkhälfte (22) wirkenden Crimpkraft,
wobei
d) der Kraftsensor (35) eine Piezofolie (36) aufweist,
e) der Kraftsensor (35) elektrisch mit einer Elektronik-Baueinheit (15) verbunden ist,
f) ein beweglicher Handhebel (3) in einem Schwenklager (9) an einem festen Zangenkörper (7) verschwenkbar angelenkt ist, beabstandet von diesem Schwenklager (9) der bewegliche Handhebel (3) in einem weiteren Schwenklager (10) mit einem Druckhebel (8), der in dem anderen Endbereich mittels eines Schwenklagers (11) an der Zangenbacke (4) angelenkt ist, verbunden ist und die Schwenklager (9, 10, 11) die Schwenklager eines Kniehebeltriebs bilden, welcher sich mit der Annäherung an eine geschlossene Stellung seiner Strecklage annähert,
g) die Crimpzange (1) über ein mechanisches Zangenteil verfügt, mittels dessen die mechanische Crimpfunktion bereitgestellt wird und welches die mechanischen Bauelemente, insbesondere die relativ zueinander verschwenkbaren Handhebel, Zangenbacken und einen die Handhebel mit den Zangenbacken koppelnden Antriebsmechanismus, aufweist,
h) eine Elektronik-Baueinheit (15) separat von diesem mechanischen Zangenteil ausgebildet ist und auf mindestens einer Seite des Zangenkopfs der Crimpzange (1) an das mechanische Zangenteil angesetzt und an diesem gehalten ist und
i) die Elektronik-Baueinheit (15) über einen Wegsensor (16) verfügt, der ein an einem Gehäuse der Elektronik-Baueinheit (15) angeordnetes erstes Sensorelement (17), insbesondere eine Platine, sowie ein zweites, an dem Druckhebel (8) gehaltenes Sensorelement (18) aufweist, wobei der Wegsensor (16) die Relativbewegung der Sensorelemente (17, 18) über den Crimphub erfasst.

2. Crimpzange (1) nach Anspruch 1, **dadurch gekennzeichnet, dass** in einer Kraftsensoreinheit (37) die Piezofolie (36) sandwichartig zwischen einem an der Zangenbacke (4) abgestützten oder von der Zangenbacke (4) ausgebildeten Abstützkörper (39) und einem Übertragungskörper (38) aufgenommen ist.

3. Crimpzange (1) nach Anspruch 2, **dadurch gekennzeichnet, dass** die Gesenkhälfte (22) auswechselbar ist und einen Gesenkrücken (34) aufweist, welcher zumindest mit einem Teil der Crimpkraft an den Übertragungskörper (38) angepresst wird.

4. Crimpzange (1) nach Anspruch 3, **dadurch gekennzeichnet, dass** die Gesenkhälfte (22) über mindestens ein Befestigungsmittel mit einem Spiel (57)
a) in Richtung der wirkenden Crimpkraft und/oder
b) verschwenkbar um eine Schwenkachse (45), die vertikal zur wirkenden Crimpkraft orientiert ist
an der Zangenbacke (4) montiert ist.

5. Crimpzange (1) nach einem der Ansprüche 2 bis 4, **dadurch gekennzeichnet, dass** die Kraftsensoreinheit (37) verschwenkbar um eine Schwenkachse (45), die vertikal zur wirkenden Crimpkraft orientiert ist, an der Zangenbacke (4) montiert ist.

6. Crimpzange (1) nach einem der Ansprüche 2 bis 5, **dadurch gekennzeichnet, dass** die Piezofolie (36) mit dem Abstützkörper (39) und/oder mit dem Übertragungskörper (38) verklebt ist.

7. Crimpzange (1) nach einem der Ansprüche 2 bis 6, **dadurch gekennzeichnet, dass** die Gesenkhälfte (22) und die Kraftsensoreinheit (37) an einer festen Zangenbacke (4) oder einem die feste Zangenbacke (4) ausbildenden festen Zangenkörper (7) abgestützt sind.

8. Crimpzange (1) nach einem der vorhergehenden Ansprüche, **dadurch gekennzeichnet, dass** die Gesenkhälfte (22) zwei Gesenkhälftenteile (49, 50) aufweist, welche über mindestens einen Querbolzen (32, 33) miteinander verbunden sind, der auf beiden Seiten aus den Gesenkhälftenteilen (49, 50) hervorsteht, wobei zwischen dem Querbolzen (32, 33) und der Zangenbacke (4) ein Spiel (57) in Richtung der wirkenden Crimpkraft ausgebildet wird.

9. Crimpzange (1) nach Anspruch 8, **dadurch gekennzeichnet, dass** an der anderen Zangenbacke (5) eine andere Gesenkhälfte (51) gehalten ist, welche mindestens einen Querbolzen (52, 53) aufweist, der auf beiden Seiten aus der anderen Gesenkhälfte (51) hervorsteht, wobei zwischen dem Querbolzen (52, 53) und der anderen Zangenbacke (5) kein Spiel in Richtung der wirkenden Crimpkraft ausgebildet wird.

10. Crimpzange (1) nach einem der Ansprüche 1 bis 9, **dadurch gekennzeichnet, dass** sich die Elektronik-Baueinheit (15) auf zwei gegenüberliegenden Seiten eines Zangenkopfs erstreckt.

11. Crimpzange (1) nach Anspruch 10, **dadurch gekennzeichnet, dass** einzelne Bestandteile der Elektronik-Baueinheit (15), insbesondere zwei Teilplatinen, jeweils auf einer Seite des Zangenkopfs angeordnet sind und über ein um das mechanische Zangenteil teilweise herumgeführtes Verbindungskabel miteinander verbunden sind.

12. Crimpzange (1) nach Anspruch 10 oder 11, **dadurch gekennzeichnet, dass** die Elektronik-Baueinheit (15)
a) zwei halbschalenartige Gehäuseteile aufweist, die sich in montiertem Zustand in Umfangsrichtung geschlossen um das mechanische Zangenteil erstrecken, und/oder
b) ein Gehäuse aufweist, welches einen für Licht durchlässigen oder teildurchlässigen Teilbereich aufweist, wobei in diesem Fall in Inneren des Gehäuses eine Leuchte angeordnet ist, die so angeordnet und ausgerichtet ist, dass von der Leuchte emittiertes Licht den durchlässigen oder teildurchlässigen Teilbereich beaufschlagt, und/oder
c) eine Batterie oder einen Akkumulator zur Energieversorgung aufweist, und/oder
d) eine GPS-Einheit aufweist, die eine Lokalisierung der Crimpzange zu ermöglicht, und/oder
e) die Zahl der durchlaufenden Arbeitshübe ermittelt oder ausgewertet und/oder
f) zu einer Bewertung von Crimpprozessen, einer Speicherung von Sensordaten, einer Diebstahlsicherung, einer akustischen Ausgabe oder einer elektronischen Einlegekontrolle für eine Kontrolle des richtigen Einlegens eines Werkstücks in das Gesenk der Crimpzange ausgebildet ist und/oder
g) im Bereich des Zangenkopfs in einem Abschnitt zwischen dem Zangenmaul und den Handhebeln (2, 3) angeordnet ist und/oder
h) sich ringförmig um das mechanische Zangenteil im Bereich des Zangenkopfs erstreckt und/oder
i) eine elektronische Steuereinheit mit Steuerlogik aufweist, die
- einen Ladezustand einer Batterie oder eines Akkumulators auswertet,
- eine Zahl von durchlaufenden Arbeitshüben ermittelt oder auswertet,
- eine Bewertung eines mit dem Zangenwerkzeug durchgeführten Bearbeitungsvorgangs vornimmt,
- Daten speichert,
- in einem Standby-Modus bei einer über einen Beschleunigungssensor erkannten Bewegung der Crimpzange (1) einen Bereitschaftsmodus aktiviert,
- bei einer Erfassung, dass für eine vorgegebene erste Zeitspanne keine Betätigung der Crimpzange (1) erfolgt ist oder für eine vorgegebene zweite Zeitspanne keine Bewegung der Crimpzange (1) erfolgt ist, ein Display oder eine Leuchte deaktiviert, wobei die erste Zeitspanne länger sein kann als die zweite Zeitspanne,
- eine drahtlose Sende- und/oder Empfangseinrichtung betreibt,
- mittels einer Leuchte den Ladezustand einer Batterie oder eines Akkumulators anzeigt,
- eine Konfiguration der Crimpzange 1 mit dem Aufspielen von Betriebsparametern ermöglicht,
- das Erreichen einer Schließstellung der Handhebel (2, 3) erfasst,
- eine Ortungsfunktion für die Ortung der Crimpzange (1) steuert,
- eine Diebstahlsicherung der Crimpzange steuert, indem diese außer Funktion gesetzt wird,
- eine akustische Ausgabe der Crimpzange (1) steuert,
- eine elektronische Einlegekontrolle für eine Kontrolle des bestimmungsgemäßen Einlegens eines Werkstücks in das Zangenmaul durchführt und/oder
- an einer Anzeige eine Anzeige erzeugen, welche ein Name oder eine Kennzeichnung eines Herstellers, eines Besitzers oder eines Benutzers, ein Ladezustand einer Batterie oder eines Akkumulators, eine gemessene Crimpkraft oder ein gemessener Crimpweg oder ein Verlauf derselben, eine Zahl der durchlaufenden Arbeitshübe, das Ergebnis einer Bewertung eines mit der Crimpzange (1) durchgeführten Crimpprozesses ist und/oder ein Hinweis hinsichtlich einer erforderlichen Wartung der Crimpzange (1) ist oder hiermit korreliert, und/oder
j) drahtlos mit einer externen elektronischen Steuereinheit, insbesondere einem Smartphone oder einem Rechner in der Arbeitsumgebung der Crimpzange (1), kommuniziert,
k) eine Erfassungseinrichtung aufweist, welche zur Erfassung einer Kennzeichnung der Gesenkhälfte und/oder eines Typs eines Werkstücks eingerichtet ist.

## Claims

1. Crimping pliers (1) comprising
a) a pliers jaw (4),
b) a die half (22) which can be supported or is supported on the pliers jaw (4) and
c) a force sensor (35) for measuring the crimping force biasing the die half (22),
wherein
d) the force sensor (35) comprises a piezo film (36),
e) the force sensor (35) is connected electrically to an electronic construction unit (15),
f) a moveable hand lever (3) is linked for being pivoted by a pivot bearing (9) to a fixed pliers body (7), the moveable hand lever (3) is connected at a location remote from the pivot bearing (9) by another pivot bearing (10) to a pressure lever (8) which is linked in the other end region by a pivot bearing (11) to the pliers jaw (4) and the pivot bearings (9, 10, 11) form the pivot bearings of a toggle lever drive which moves towards its extended state when moving towards a closed position,
g) the crimping pliers (1) comprise a mechanical pliers part by means of which the mechanical crimping functionality is provided and which comprises the mechanical construction elements, in particular the hand lever pivoted relatively to each other, the pliers jaws and a drive mechanism coupling the hand levers to the pliers jaws,
h) an electronic construction unit (15) is formed separately from the mechanical pliers part and joined on at least one side of the pliers head of the crimping pliers (1) to the mechanical pliers part and held by the same and
i) the electronic construction unit (15) comprises a displacement sensor (16) which comprises a first sensor element (17) (in particular a circuit board) arranged at a housing of the electronic construction unit (15) as well as a second sensor element (18) held by the pressure lever (8), the displacement sensor (16) sensing the relative movement of the sensor elements (17, 18) over the crimping stroke.

2. Crimping pliers (1) of claim 1, **characterized in that** in a force sensor unit (37) the piezo film (36) is accommodated similar to a sandwich between a supporting body (39) which is supported on the pliers jaw (4) or formed by the pliers jaw (4) and a transfer body (38).

3. Crimping pliers (1) of claim 2, **characterized in that** the die half (22) is exchangeable and comprises a die back (34) which is pressed at least with a part of the crimping force against the transfer body (38).

4. Crimping pliers (1) of claim 3, **characterized in that** the die half (22) is assembled to the pliers jaw (4) by at least one mounting means under the provision of a play (57)
a) in the direction of the effective crimping force and/or
b) for being pivoted about a pivot axis (45) which has an orientation vertical to the effective crimping force.

5. Crimping pliers (1) of one of claims 2 to 4, **characterized in that** the force sensor unit (37) is assembled to the pliers jaw (4) for being pivoted about a pivot axis (45) which has an orientation vertical to the effective crimping force.

6. Crimping pliers (1) of one of claims 2 to 5, **characterized in that** the piezo film (36) is adhered to the supporting body (39) and/or to the transfer body (38).

7. Crimping pliers (1) of one of claims 2 to 6, **characterized in that** the die half (22) and the force sensor unit (37) are supported on a fixed pliers jaw (4) or a fixed pliers body (7) forming the fixed pliers jaw (4).

8. Crimping pliers (1) of one of the preceding claims, **characterized in that** the die half (22) comprises two die half parts (49, 50) which are connected to each other by at least one transverse bolt (32, 33) which protrudes on both sides from the die half parts (49, 50), a play (57) in the direction of the effective crimping force being established between the transverse bolt (32, 33) and the pliers jaw (4).

9. Crimping pliers (1) of claim 8, **characterized in that** another die half (51) is held on the other pliers jaw (5), the other die half (51) comprising at least one transverse bolt (52, 53) which protrudes on both sides from the other die half (51), no play in the direction of the effective crimping force being established between the transverse bolt (52, 53) and the other pliers jaw (5).

10. Crimping pliers (1) of one of claims 1 to 9, **characterized in that** the electronic construction unit (15) extends along two opposite sides of a pliers head.

11. Crimping pliers (1) of claim 10, **characterized in that** single components of the electronic construction unit (15) (in particular two printed circuit board parts) are each arranged on one side of the pliers head and linked to each other by a connecting cable which partially extends around the mechanical pliers part.

12. Crimping pliers (1) of claim 10 or 11, **characterized in that** the electronic construction unit (15)
a) comprises two semi shell-shaped housing parts which in the assembled state extend in a closed fashion in circumferential direction around the mechanical pliers part and/or
b) comprises a housing which comprises a subsection being transparent or at least partially transparent for light, in this case a lamp being arranged in the interior of the housing, the lamp being arranged and oriented such that light emitted by the lamp impinges on the transparent or at least partially transparent subsection and/or
c) comprises a battery or an accumulator for the power supply and/or
d) comprises a GPS unit which allows a localization of the crimping pliers and/or
e) determines or analyzes the number of executed working strokes and/or
f) is configured for evaluating crimping processes, for storing sensor data, for a securing against theft, for an acoustic output or an electronic insertion monitoring for monitoring the correct insertion of a workpiece into the die of the crimping pliers and/or
g) is arranged in the region of the pliers head in a section between the pliers mouth and the hand levers (2, 3) and/or
h) extends in a ring shape around the mechanical pliers part in the region of the pliers head and/or
i) comprises an electronic control unit with control logic which
- analyzes a loading state of a battery or accumulator,
- determines or analyzes a number of executed working strokes,
- provides an evaluation of a working process executed by the pliers tool,
- stores data,
- in a standby mode activates a ready-to-use mode when detecting a movement of the crimping pliers (1) by an acceleration sensor,
- when detecting that for a given first time span the crimping pliers (1) have not been actuated or for a given second time span no movement of the crimping pliers (1) has occurred deactivates a display or a lamp, preferably the first time span being longer than the second time span,
- operates a wireless transmitting and/or receiving device,
- displays the loading state of a battery or an accumulator by means of a lamp,
- allows a configuration of the crimping pliers (1) by transferring operation parameters,
- senses an arrival of the hand levers (2, 3) at a closed state,
- controls a localizing function for localizing the crimping pliers (1),
- controls a securing against a theft of the crimping pliers by setting the crimping pliers out of function,
- controls an acoustic output of the crimping pliers (1),
- executes an electronic insertion monitoring for monitoring the insertion of a workpiece into the pliers mouth according to the specifications and/or
- generates an output at a display which is or correlates with a name or a label of a manufacturer, an owner or a user, a loading state of a battery or accumulator, a measured crimping force or a measured crimping displacement or a curve of the same, a number of executed working strokes, the result of an evaluation of a crimping process executed by the crimping pliers (1) and/or an indication of a required maintenance of the crimping pliers (1) and/or
j) wirelessly communicates with an extern electronic control unit, in particular a cellphone or a processor in the working neighborhood of the crimping pliers (1),
k) comprises a detection device which is configured for detecting a label of the die half and/or a type of a workpiece.

## Revendications

1. Pince à sertir (1) avec
a) une mâchoire de pince (4),
b) une moitié de matrice (22) qui peut être appuyée ou qui est appuyée contre la mâchoire de pince (4) et
c) un capteur de force (35) pour la mesure de force de sertissage agissant sur la moitié de matrice (22),
dans laquelle
d) le capteur de force (35) comprend un film piézoélectrique (36),
e) le capteur de force (35) est relié électriquement à un module électronique (15),
f) un levier manuel mobile (3) est articulé de manière pivotante dans un palier de pivotement (9) avec un corps de pince fixe (7), à distance de ce palier de pivotement (9), le levier manuel mobile (3) est relié, dans un autre palier de pivotement (10), avec un levier de pression (8), qui est articulé, dans l'autre partie d'extrémité, au moyen d'un palier de pivotement (11) avec la mâchoire de mince (4), et les paliers de pivotement (9, 10, 11) constituent les paliers de pivotement d'un mécanisme à levier à genouillère qui s'approche de sa position d'étirement lorsqu'il approche d'une position fermée,
g) la pince à sertie (1) est munie d'une partie mécanique de la pince, au moyen de laquelle la fonction de sertissage mécanique est remplie et qui comprend les composants mécaniques, plus particulièrement les leviers manuels pivotant entre eux, les mâchoires de la pince et un mécanisme d'entraînement couplant les leviers manuels avec les mâchoires de la pince,
h) un module électronique (15) est réalisé séparément de cette partie mécanique de la pince et est posé, sur au moins un côté de la tête de la pince à sertir (1), contre la partie mécanique de la pince et maintenu contre celle-ci et
i) le module électronique (15) est muni d'un capteur de déplacement (16) qui un premier élément de capteur (17), plus particulièrement une platine, disposé sur un boîtier du module électronique (15), ainsi qu'un deuxième élément de capteur (18), maintenu contre le levier de pression (8), dans lequel le capteur de déplacement (16) mesure le mouvement relatif des éléments de capteur (17, 18) sur la course de sertissage.

2. Pince à sertir (1) selon la revendication 1, **caractérisée en ce que**, dans une unité de capteur de force (37), le film piézoélectrique (36) est logé en sandwich entre un corps d'appui (39) appuyé contre la mâchoire de pince (4) ou constitué de la mâchoire de pince (4) et un corps de transmission (38).

3. Pince à sertir (1) selon la revendication 2, **caractérisée en ce que** la moitié de matrice (22) est interchangeable et présente un dos de matrice (34) qui est comprimé, au moins avec une partie de la force de sertissage, contre le corps de transmission (38).

4. Pince à sertir (1) selon la revendication 3, **caractérisée en ce que** la moitié de matrice (22) est montée sur la mâchoire de pince (4) par l'intermédiaire d'au moins un moyen de fixation avec un jeu (57)
a) dans la direction de la force de sertissage appliquée et/ou
b) orienté de manière pivotante autour d'un axe de pivotement (45) qui est vertical par rapport à la force de sertissage appliquée.

5. Pince à sertir (1) selon l'une des revendications 2 à 4, **caractérisée en ce que** l'unité de capteur de force (37) est montée sur la mâchoire de pince (4) de manière pivotante autour d'un axe de pivotement (45) qui est orienté verticalement par rapport à la force de sertissage appliquée.

6. Pince à sertir (1) selon l'une des revendications 2 à 5, **caractérisée en ce que** le film piézoélectrique (36) est collé avec le corps d'appui (39) et/ou avec le corps de transmission (38).

7. Pince à sertir (1) selon l'une des revendications 2 à 6, **caractérisée en ce que** la moitié de matrice (22) et l'unité de capteur de force (37) sont appuyés contre une mâchoire de pince fixe (4) ou contre un corps de pince fixe (7) constituant la mâchoire de pince fixe (4).

8. Pince à sertir (1) selon l'une des revendications précédentes, **caractérisée en ce que** la moitié de matrice (22) comprend deux parties de moitié de matrice (49, 50) qui sont reliées entre elles par l'intermédiaire d'au moins une tige transversale (32, 33) qui dépasse des deux côtés des parties de moitié de matrice (49, 50), dans laquelle, entre la tige transversale (32, 33) et la mâchoire de pince (4), un jeu (57) est prévu dans la direction de la force de sertissage appliquée.

9. Pince à sertir (1) selon la revendication 8, **caractérisée en ce que**, contre l'autre mâchoire de pince (5) est maintenue une autre moitié de matrice (51), qui comprend au moins une tige transversale (52, 53), qui dépasse des deux côtés de l'autre moitié de matrice (51), dans laquelle, entre la tige transversale (52, 53) et l'autre mâchoire de pince (5), aucun jeu n'est prévu dans la direction de la force de sertissage appliquée.

10. Pince à sertir (1) selon l'une des revendications 1 à 9, **caractérisée en ce que** le module électronique (15) s'étend sur deux côtés opposés d'une tête de pince.

11. Pince à sertir (1) selon la revendication 10, **caractérisée en ce que** certains composants du module électronique (15), plus particulièrement deux platines partielles, sont disposées chacune sur un côté de la tête de pince et sont reliées entre elles par l'intermédiaire d'un câble de liaison guidé partiellement autour de la partie mécanique de la pince.

12. Pince à sertir (1) selon la revendication 10 ou 11, **caractérisée en ce que** le module électronique (15)
a) comprend deux parties de boîtier en formes de demi-coques, qui s'étendent, dans l'état monté, fermées dans la direction de la circonférence, autour de la partie mécanique de la pince et/ou
b) comprend un boîtier qui présente une partie transparente ou partiellement transparente, dans lequel, dans ce cas, à l'intérieur du boîtier, un voyant est disposé, qui est disposé et orienté de sorte que la lumière émise par le voyant arrive sur la partie transparente ou partiellement transparente et/ou
c) comprend une batterie ou un accumulateur pour l'alimentation en énergie et/ou
d) comprend une unité GPS qui permet une localisation de la pince à sertir et/ou
e) détermine ou analyse le nombre des courses de travail effectuées et/ou
f) est conçu pour effectuer une analyse des processus de sertissage, l'enregistrement des données de capteurs, pour permettre une sécurisation contre le vol, une sortie acoustique ou un contrôle électronique d'insertion afin de contrôle l'insertion correcte d'une pièce dans la matrice de la pince à sertir et/ou
g) est disposé au niveau de la tête de pince, dans une portion entre la mâchoire d ela pince et les leviers manuels (2, 3) et/ou
h) s'étend de manière annulaire autour de la partie mécanique de la pince au niveau de la tête de pince et/ou
i) comprend une unité de commande électronique qui
- analyse un état de charge d'une batterie ou d'un accumulateur,
- détermine ou analyse un nombre de courses de travail effectuées,
- effectue une analyse d'un processus de traitement effectué avec la pince,
- enregistre des données,
- active, dans un mode stand-by, un mode de veille, lorsqu'un mouvement de la pince à sertir (1) a été détecté par l'intermédiaire d'un capteur d'accélération,
- désactive, lorsqu'il est détecté que, pendant une première période prédéterminée, aucun actionnement de la pince à sertir (1) n'a eu lieu, ou que, pendant une deuxième période prédéterminée, aucun mouvement de la pince à sertir (1) n'a eu lieu, un affichage ou un voyant, dans lequel la première période peut être plus longue que la deuxième période,
- fait fonctionner un dispositif d'émission-réception sans fil,
- affiche, à l'aide d'un voyant l'état de charge d'une batterie ou d'un accumulateur,
- permet une configuration de la pince à sertir (1) avec le pré-chargement de paramètres de fonctionnement,
- détecte le fait que la position de fermeture des leviers manuels (2, 3) est atteinte,
- contrôle une fonction de localisation pour la localisation de la pince à sertir (1),
- contrôle une sécurisation anti-vol de la pince à sertir en désactivant celle-ci,
- contrôle une sortie acoustique de la pince à sertir (1),
- effectue un contrôle électronique d'insertion pour le contrôle de l'insertion correcte d'une pièce dans la mâchoire de la pince et/ou
- génère, sur un écran, un affichage indiquant ou corrélé avec un nom ou une identification d'un fabricant, d'un propriétaire ou d'un utilisateur, un état de charge d'une batterie ou d'un accumulateur, une force de sertissage mesurée ou une course de sertissage mesurée ou une évolution de celles-ci, un nombre de courses de travail effectuées, le résultat d'une analyse d'un processus de sertissage effectué avec la pince à sertir (1) et/ou une information concernant une maintenance nécessaire de la pince à sertir (1) et/ou
j) communique sans fil avec une unité de commande électronique externe, plus particulièrement un smartphone ou un ordinateur dans l'environnement de travail de la pince à sertir (1),
k) comprend un dispositif de détection qui est conçu pour détecter une identification de la moitié de matrice et/ou d'un type de pièce.
